(19) Europäisches Patentamt / European Patent Office / Office européen des brevets

(11) **EP 2 448 064 A1**

(12) **EUROPEAN PATENT APPLICATION**
published in accordance with Art. 153(4) EPC

(43) Date of publication:
**02.05.2012 Bulletin 2012/18**

(51) Int Cl.:
*H01Q 5/01* (2006.01)    *G06K 19/07* (2006.01)
*G06K 19/077* (2006.01)    *H01Q 7/00* (2006.01)
*H01Q 9/26* (2006.01)    *H01Q 21/30* (2006.01)

(21) Application number: **10791932.6**

(22) Date of filing: **26.05.2010**

(86) International application number:
**PCT/JP2010/058902**

(87) International publication number:
**WO 2010/150614 (29.12.2010 Gazette 2010/52)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **26.06.2009 PCT/JP2009/061742**

(71) Applicant: **Mitsubishi Electric Corporation
Tokyo 100-8310 (JP)**

(72) Inventors:
• **NISHIOKA, Yasuhiro
Tokyo 100-8310 (JP)**
• **FUKASAWA, Toru
Tokyo 100-8310 (JP)**

• **MIYASHITA, Hiroaki
Tokyo 100-8310 (JP)**
• **MIZUNO, Tomohiro
Tokyo 100-8310 (JP)**
• **SASAKI, Takuro
Tokyo 100-8310 (JP)**
• **OKEGAWA, Hirokatsu
Tokyo 100-8310 (JP)**

(74) Representative: **Sajda, Wolf E.
Meissner, Bolte & Partner GbR
Postfach 86 06 24
81633 München (DE)**

(54) **RADIO COMMUNICATION DEVICE**

(57) Provided is a wireless communication device capable of communicating a signal in a first frequency band and a signal in a second frequency band, which is lower in frequency than the first frequency band, including: a plate-like object; a first integrated circuit which has a function of communicating in the first frequency band; a first conductive object which is connected to one of two input/output terminals of the first integrated circuit; a conductive object group constituted of a plurality of second conductive objects at least one of which is connected to another of the two input/output terminals of the first integrated circuit; a second integrated circuit which has a function of communicating in the second frequency band; and a coiled conductive object of which a winding start side is connected to one of two input/output terminals of the second integrated circuit and a winding end side is connected to another of the two input/output terminals of the second integrated circuit. The conductive object group and the coiled conductive object are formed on opposite faces of the plate-like object from each other. In a perspective view from a normal line direction of the plate-like object, a half or more of the coiled conductive object overlaps with the conductive object group.

FIG. 1

EP 2 448 064 A1

**Description**

Technical Field

The present invention relates to a wireless communication device that has the antenna structure of a tag used in a radio frequency identification (RFID) system, and more particularly, to a wireless communication device capable of multi-frequency communication.

Background Art

RFID systems for automatically recognizing and managing people or articles are rapidly becoming popular in recent years. The electromagnetic field emitted from an antenna for use in RFID systems contains three fields: a quasi electrostatic field, an induction field, and a radiation field. The intensities of those fields are in inverse proportion to the cube of the distance from the antenna, the square of the distance from the antenna, and the distance from the antenna, respectively.

From this viewpoint, communication methods for RFID systems are roughly classified into an induction field coupling method which uses an induction field in the LF band or the HF band and a radiation field coupling method which uses a radiation field having a frequency of several hundreds MHz or higher (the UHF band, the microwave band, or the like).

As to the former method, i.e., induction field coupling, RFID systems that use the 125 kHz to 135 kHz band, which is the LF band, have been in use since 1980's in the factory automation (FA) field and other fields. RFID systems that use the 13.56 MHz band, which is the HF band, have been put into a wide range of practical uses including entrance/exit security management and fare adjustment in public transportation systems such as bus and railway.

The latter method, i.e., radiation field coupling, uses frequencies in the 433 MHz band, the 860 MHz to 960 MHz band, and the 2.45 GHz band, is longer in communication range than the former, and is beginning to be put into practical uses, mainly logistics and parts management at production plants. However, the former method, induction field coupling, is most popular at present, specifically HF-band RFID systems.

Under the circumstances, some wish to keep their existing HF-band RFID systems and additionally introduce new UHF-band RFID systems. In this case, it is undesirable for a user to have a plurality of RFID tags for the existing and new RFID systems in light of the user's convenience. Desirably, a single tag serves for a plurality of RFID systems.

Against this background, the research and development of card-type RFID tags that can be used in HF-band RFID systems and UHF-band RFID systems both has been underway in recent years. To give an example, a method of forming a UHF-band communication dipole antenna inside an HF-band communication coil conductor, which is formed on a card, has been proposed (see, for example, Patent Literature 1 and Non-patent Literature 1).

Methods of putting an HF-band communication coil and a UHF-band communication antenna in a single card are roughly classified into two contrasting arrangement methods: one is to place the UHF-band antenna inside the HF-band coil as in Patent Literature 1 and Non-patent Literature 1, and the other is to place the UHF-band antenna outside the HF-band coil.

Citation List

Patent Literature

[PTL 1] JP 2004-240 899 A

Non Patent Literature

[NPL 1] K. S. Leong, M. L. Ng, and P. H. Cole, "Miniaturization of dual frequency RFID antenna with high frequency ratio", 2007 IEEE Antennas and Propagation Society International Symposium Digest, pp. 5475-5478, July 2007

Summary of Invention

Technical Problem

In a conventional wireless communication device that uses the method of Patent Literature 1 and Non-patent Literature 1, where the UHF-band antenna is placed inside the HF-band coil, the UHF-band communication range is approximately 2 m according to Non-patent Literature 1. If this tag is used to manage the entrance/exit of vehicles, for example, the communication range is not quite sufficient and needs to be improved. The tag thus has a problem in that a communication range sufficient for practical uses is not easily accomplished.

However, Non-patent Literature 1 only states that the UHF-band communication range is approximately 2 m, and does not mention the performance of the antenna itself such as gain or radiation efficiency. The communication range also depends greatly on the performance of a tag integrated circuit (hereinafter, abbreviated as IC) connected to the tag antenna. Assuming that the antenna used in the communication test of Non-patent Literature 1 has high performance whereas the performance of the employed IC is poor, the method of Non-patent Literature 1 where the UHF-band antenna is placed inside the HF-band coil possesses an advantage in that the HF-band coil can have a maximum opening area within the limited card size. The method is accordingly considered as very effective as an antenna format for a high-performance HF/UHF dual-band card-type tag that the present invention aims at.

In order to assess the effectiveness of this method, the inventors of the present invention conducted a basic experiment for measuring the radiation efficiency of a UHF-band dipole antenna that is placed inside an HF-band coil.

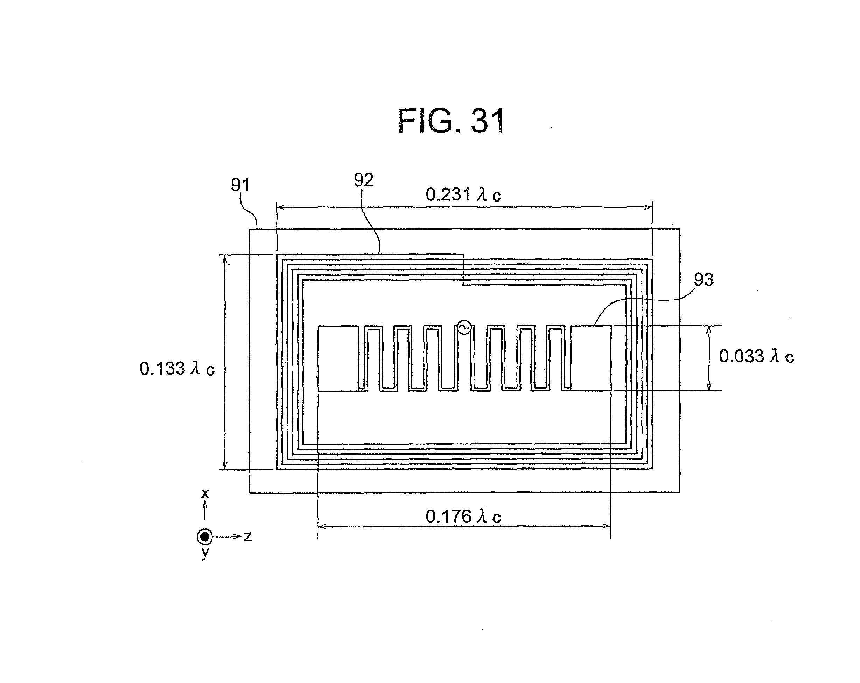

FIG. 31 is a plan view illustrating the structure of a wireless communication device used in the experiment. A coil 92 was formed on a dielectric substrate 91, and a dipole antenna 93 downsized by meandering and top capacity loading was disposed. The dipole antenna 93 is 0.176 $\lambda c$ in length and 0.033 $\lambda c$ in width.

The unit "$\lambda c$" is the wavelength in the air at 910 MHz, which is the center frequency in the global bandwidth (860 MHz to 960 MHz) of passive UHF-RFID. The wire width and inter-turn gap of the coiled wire were selected with non-contact IC cards (HF-band card-type RFID tags) that have been put into practice as a reference. The non-contact IC cards put into practice were also used as a reference in setting the number of turns of the coiled wire to three to six.

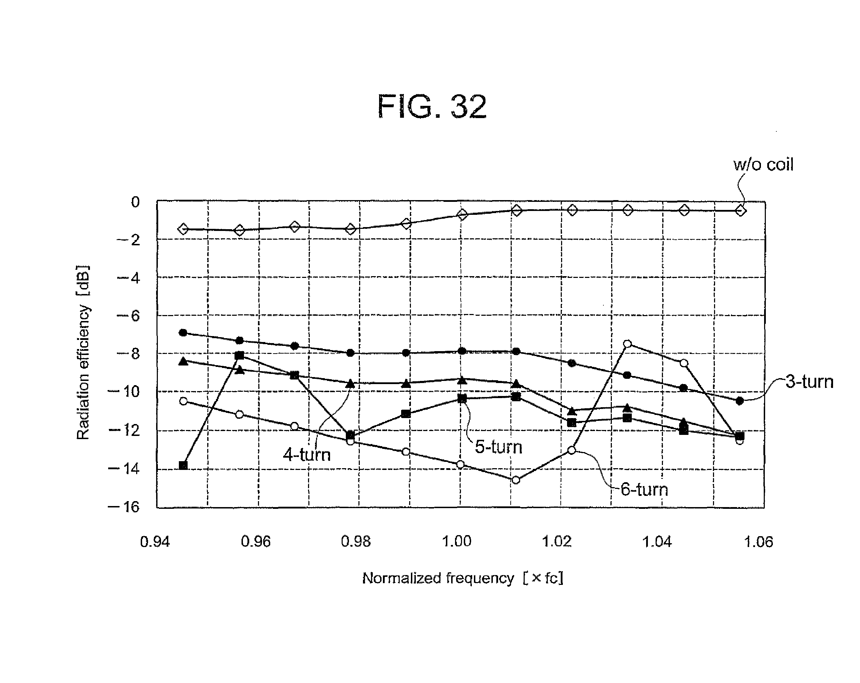

FIG. 32 is a graph showing the radiation efficiency measurement results of the UHF-band dipole antenna 93 of FIG. 31. The axis of abscissa shows frequencies normalized at the center frequency 910 MHz, and the axis of ordinate shows measured values of radiation efficiency in the units of dB. For example, a radiation efficiency of -10 dB is equivalent to a radiation efficiency of 10%. The radiation efficiency of the dipole antenna 93 when surrounded by the coil 92 is -7 dB or less regardless of changes in number of turns from three ("3-turn") to six ("6-turn"), and is lower than that of the dipole alone, namely, the radiation efficiency of the dipole antenna 93 when not surrounded by the coil 92 ("w/o coil"), by 5 dB or more.

The experiment results show that it is difficult to realize a high-performance UHF-band tag, in other words, a UHF-band tag that has a long communication range, with the method of Patent Literature 1 and Non-patent Literature 1 where the UHF-band antenna is placed inside the HF-band coil. This is because electromagnetic coupling between the dipole antenna 93 and the coil 92 induces a UHF-band current above the coil conductor and a radiation field from the induced current cancels out a radiation field from one of currents flowing in the dipole antenna 93 that contributes to long-distance radiation (current component in a direction z of FIG. 31), thereby lowering the radiation resistance considerably.

The other prior art, namely, the method of placing the UHF-band antenna outside the HF-band coil, needs to make the mounting area of the HF-band coil small in order to allow for a space to dispose the UHF-band antenna. However, making the mounting area of the HF-band coil small invites a drop in HF-band communication range because the HF-band communication range is roughly in proportion to the area of the coil.

Moreover, in both of the two arrangement methods, mutual interference occurs between the HF-band coil and the UHF-band antenna. Lessening the deterioration of communication range due to the mutual interference requires the HF-band antenna conductor and the UHF-band antenna conductor to be distanced from each other to a certain degree. This reduces the respective mounting areas of the HF-band antenna and the UHF-band antenna, and can consequently deteriorate the communication range.

The present invention has been made in view of those problems, and an object of the present invention is to obtain a card-type wireless communication device having an RFID tag function applicable to both an LF-band RFID system (or an HF-band RFID system) and a UHF-band RFID system that secures as large a mounting area as possible for an antenna of one frequency band and an antenna of the other frequency band each, and that has a communication range equal to the communication range of a tag for the LF-band RFID system (or the HF-band RFID system) alone and the communication range of a tag for the UHF-band RFID system alone.

Solution to the Problem

According to the present invention, there is provided a wireless communication device capable of communicating a signal in a first frequency band and a signal in a second frequency band, which is lower in frequency than the first frequency band, including: a plate-like object; a first integrated circuit which has a function of communicating in the first frequency band; a first conductive object which is connected to one of two input/output terminals of the first integrated circuit; a conductive object group constituted of a plurality of second conductive objects at least one of which is connected to another of the two input/output terminals of the first integrated circuit; a second integrated circuit which has a function of communicating in the second frequency band; and a coiled conductive object of which a winding start side is connected to one of two input/output terminals of the second integrated circuit and a winding end side is connected to another of the two input/output terminals of the second integrated circuit, in which the conductive object group and the coiled conductive object are formed on opposite faces of the plate-like object from each other, and, in a perspective view from a normal line direction of the plate-like object, a half or more of the coiled conductive object overlaps with the conductive object group.

Advantageous Effects of the Invention

The wireless communication device according to the present invention provides effects that as large a mounting area as possible can be secured for an antenna of one frequency band and an antenna of the other frequency band each, and that a communication range equal to the communication range of a tag for an LF-band RFID system (or an HF-band RFID system) alone and the communication range of a tag for a UHF-band RFID system alone, thereby being applicable to both the LF-band RFID system (or the HF-band RFID system).

Brief Description of Drawings

FIG. 1    is a plan view illustrating the top structure of a card-type wireless communication device according to a first embodiment of the present invention.

FIG. 2    is a plan view illustrating the bottom structure of the card-type wireless communication device according to the first embodiment of the present invention.

FIG. 3    is a sectional view taken along the line A-A' of FIG. 1 and FIG. 2.

FIG. 4    is a diagram illustrating electromagnetic coupling between a conductive object 6 and a coiled conductive object 2 of the wireless communication device according to the first embodiment of the present invention.

FIGs. 5    Characteristics diagrams illustrating impedance-frequency characteristics Z1 which are seen from an input/output terminal of an integrated circuit 4 to the antenna side of the wireless communication device according to the first embodiment of the present invention.

FIG. 6    is a diagram illustrating the radiation efficiency of the wireless communication device according to the first embodiment of the present invention.

FIG. 7    is a diagram illustrating the result of calculating the x-z plane radiation pattern and y-z plane radiation pattern of the wireless communication device according to the first embodiment of the present invention.

FIG. 8    is a table showing the result of calculating the input impedance of the coiled conductive object 2 at a second frequency of the wireless communication device according to the first embodiment of the present invention.

FIG. 9    is a plan view that is a top view of a first alternative structure of the card-type wireless communication device according to the first embodiment of the present invention.

FIG. 10    is a plan view that is a bottom view of the first alternative structure of the card-type wireless communication device according to the first embodiment of the present invention.

FIG. 11    is a characteristics diagram illustrating impedance-frequency characteristics Z2 of the wireless communication device of FIG. 9 and FIG. 10.

FIG. 12    is a plan view that is a top view of a second alternative structure of the card-type wireless communication device according to the first embodiment of the present invention.

FIG. 13    is a plan view that is a bottom view of the second alternative structure of the card-type wireless communication device according to the first embodiment of the present invention.

FIG. 14    is a characteristics diagram illustrating impedance-frequency characteristics Z3 of the wireless communication device of FIG. 12 and FIG. 13.

FIG. 15    is a plan view illustrating the top structure of a card-type wireless communication device according to a second embodiment of the present invention.

FIG. 16    is a plan view illustrating the bottom structure of the card-type wireless communication device according to the second embodiment of the present invention.

FIG. 17 is a plan view that is a top view of a first alternative structure of the card-type wireless communication device according to the second embodiment of the present invention.

FIG. 18 is a plan view that is a bottom view of the first alternative structure of the card-type wireless communication device according to the second embodiment of the present invention.

FIG. 19 is a plan view that is a top view of a second alternative structure of the card-type wireless communication device according to the second embodiment of the present invention.

FIG. 20 is a plan view that is a bottom view of the second alternative structure of the card-type wireless communication device according to the second embodiment of the present invention.

FIG. 21 is a plan view that is a top view of a third alternative structure of the card-type wireless communication device according to the second embodiment of the present invention.

FIG. 22 is a plan view that is a bottom view of the third alternative structure of the card-type wireless communication device according to the second embodiment of the present invention.

FIG. 23 is a plan view illustrating the top structure of a card-type wireless communication device according to a third embodiment of the present invention.

FIG. 24 is a plan view illustrating the bottom structure of the card-type wireless communication device according to the third embodiment of the present invention.

FIG. 25 is a plan view that is a top view of a first alternative structure of the card-type wireless communication device according to the third embodiment of the present invention.

FIG. 26 is a plan view that is a bottom view of the first alternative structure of the card-type wireless communication device according to the third embodiment of the present invention.

FIG. 27 is a plan view that is a top view of a second alternative structure of the card-type wireless communication device according to the third embodiment of the present invention.

FIG. 28 is a plan view that is a bottom view of the second alternative structure of the card-type wireless communication device according to the third embodiment of the present invention.

FIG. 29 is a plan view that is a top view of a third alternative structure of the card-type wireless communication device according to the third embodiment of the present invention.

FIG. 30 is a plan view that is a bottom view of the third alternative structure of the card-type wireless communication device according to the third embodiment of the present invention.

FIG. 31 is a plan view illustrating the structure of a wireless communication device that was used in an experiment.

FIG. 32 is a graph showing the radiation efficiency measurement result of a UHF-band dipole antenna of FIG. 31.

FIG. 33 is a graph showing the result of calculating radiation efficiency-frequency characteristics of the wireless communication device according to the first embodiment of the present invention and a wireless communication device according to a fourth embodiment of the present invention.

FIG. 34 is a plan view illustrating the top structure of the card-type wireless communication device according to the fourth embodiment of the present invention.

FIG. 35 is a plan view illustrating the bottom structure of the card-type wireless communication device according to the fourth embodiment of the present invention.

FIG. 36 is a plan view that is a top view of a first alternative structure of the card-type wireless communication device according to the fourth embodiment of the present invention.

FIG. 37 is a plan view that is a bottom view of the first alternative structure of the card-type wireless communication device according to the fourth embodiment of the present invention.

FIG. 38 is a plan view that is a top view of a second alternative structure of the card-type wireless communication device according to the fourth embodiment of the present invention.

FIG. 39 is a plan view that is a bottom view of the second alternative structure of the card-type wireless communication device according to the fourth embodiment of the present invention.

FIG. 40 is a plan view that is a top view of a third alternative structure of the card-type wireless communication device according to the fourth embodiment of the present invention.

FIG. 41 is a plan view that is a bottom view of the third alternative structure of the card-type wireless communication device according to the fourth embodiment of the present invention.

## Description of Embodiments

First to fourth embodiments of the present invention are described below.

## First Embodiment

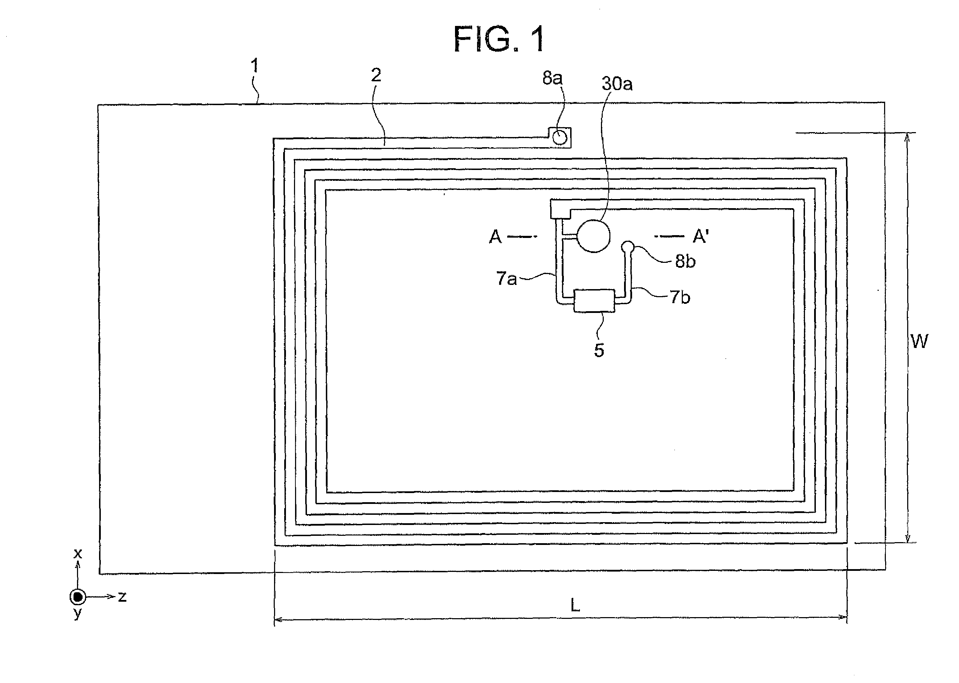

A wireless communication device according to the first embodiment of the present invention is described with reference to FIG. 1 to FIG. 14. FIG. 1, FIG. 2, and FIG. 3 are diagrams illustrating the structure of the wireless communication device according to the first embodiment of the present invention. In the following description, the same or equivalent components are denoted by the same reference symbols throughout the drawings.

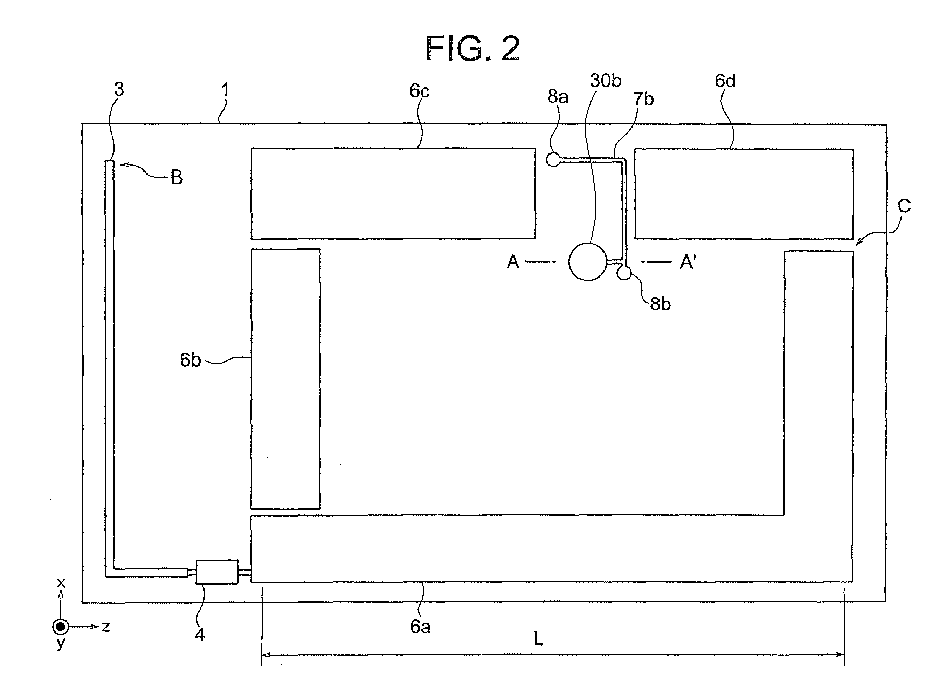

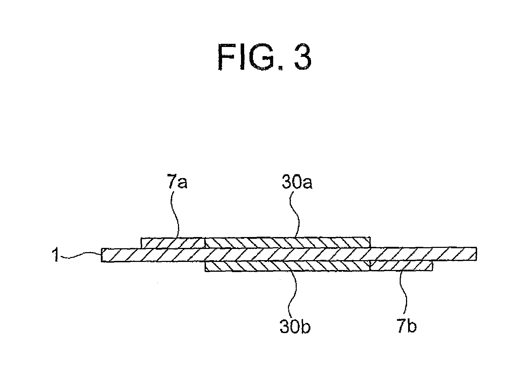

FIG. 1 is a plan view illustrating the top structure of the card-type wireless communication device, FIG. 2 is a plan view illustrating the bottom structure of the card-type wireless communication device, and FIG. 3 is a sectional view taken along the line A-A' of FIG. 1 and FIG. 2.

Referring to FIG. 1 to FIG. 3, the wireless communication device according to the first embodiment of the present invention is provided with a plate-like object 1, which is a dielectric material, a magnetic material, or the like, a coiled conductive object 2, which has outside dimensions L (length) and W (width), a conductive object (first conductive object) 3, an integrated circuit (first integrated circuit) 4, an integrated circuit (second integrated circuit) 5, conductive objects (conductive object group) 6 (conductive objects (second conductive objects) 6a, 6b, 6c, and 6d), conductive objects 7a and 7b, interlayer connection portions 8 (8a and 8b), which are through holes or the like, and a parallel plate capacitor (first capacitor) 30, which is constituted of a pair of plate-like conductive objects 30a and 30b (see FIG. 3).

The plate 30a which is one of the components (top side) of the parallel plate capacitor 30 establishes electrical continuity with the conductive object 7a, and the plate 30b which is the other component (bottom side) of the parallel plate capacitor 30 establishes electrical continuity with the conductive object 7b.

The structure of FIG. 1 to FIG. 3 minus the conductive object 3, the integrated circuit 4, and the conductive objects 6 is the most basic known structure of non-contact IC cards that are widespread at present.

The integrated circuit 4 has functions necessary for communication in a first frequency band. The integrated circuit 5 has functions necessary for communication in a second frequency band. Usually, the integrated circuits 4 and 5 each include two input/output terminals (one terminal pair). The conductive objects 7a and 7b connect the coiled conductive object 2 to the two input/output terminals of the integrated circuit 5. Specifically, a winding start side of the coiled conductive object 2 is connected to one of the two input/output terminals of the integrated circuit 5 and a winding end side of the coiled conductive object 2 is connected to the other of the two input/output terminals. The interlayer connection portions 8 connect the conductive objects 2 and 7b formed on the top face of the plate-like object 1 to the conductive object 7b formed on the bottom face of the plate-like object 1.

An operation of the wireless communication device according to the first embodiment is described next with reference to the drawings.

The parallel plate capacitor 30 is electrically connected in parallel to the integrated circuit 5. The parallel plate capacitor 30 usually constitutes an LC parallel resonant circuit together with the coiled conductive object 2, and the resonant circuit is designed to have a capacitance value that makes the resonant circuit resonate at a desired frequency in the second frequency band. Alternatively, the resonant circuit is designed to have a capacitance value that ensures a favorable impedance match between a circuit formed from the coiled conductive object 2 and the integrated circuit 5 at a desired frequency in the second frequency band.

As is well known, generally, when the capacitance value of the capacitor is given as C and the frequency of an alternating current power source is given as f, an impedance value Z of the capacitor is obtained by the following Expression (1).

$$Z = -j/(2\pi fC) \qquad \qquad ...(1).$$

The ratio of the impedance value Z of the capacitor is a reciprocal of the ratio of the frequency f as is clear from the Expression (1). When a first center frequency $f_1$ and a second center frequency $f_2$ are 2.45 [GHz] and 13.56 [MHz], respectively, the center frequency ratio $f_1/f_2$ is expressed by the following Expression (2).

$$f_1/f_2 \approx 181 \qquad \qquad ...(2).$$

When the first center frequency $f_1$ and the second center frequency $f_2$ are 960 [MHz] and 13.56 [MHz], respectively, the center frequency ratio $f_1/f_2$ is expressed by the following Expression (3).

$$f_1/f_2 \approx 71 \qquad\qquad ...(3).$$

When the first center frequency $f_1$ and the second center frequency $f_2$ are 860 [MHz] and 13.56 [MHz], respectively, the center frequency ratio $f_1/f_2$ is expressed by the following Expression (4).
$$f_1/f_2 \approx 63 \qquad\qquad ...(4).$$

The second center frequency $f_2$ is 13.56 [MHz] in the conditions given above. If $f_2$ is 135 [kHz], the center frequency ratio $f_1/f_2$ is set to a value hundred times the value of the Expression (2), (3), or (4).
In many non-contact IC cards (HF-band card-type RFID tags) that have been put into practical use, the capacitance value corresponding to that of the parallel plate capacitor 30 of FIG. 1 to FIG. 3 is set to ten or so pF to several tens pF. For example, when the capacitance value of the capacitor is 10 pF and the frequency $f_1$ is 860 MHz, an impedance $Z_1$ of the capacitor is estimated as 0-j18.5 $\Omega$. When the second center frequency f2 is 13.56 MHz, an impedance $Z_2$ is approximately equal to 0-j1166 $\Omega$.
Thus, when the first frequency band is sufficiently higher than the second frequency band, the parallel plate capacitor 30 substantially has an electrically short-circuited structure in the first frequency band. The antenna characteristics in the first frequency band therefore hardly depend on the electrical characteristics of the integrated circuit 5.
In the case where magnetic energy generated by a reader/writer in the second frequency band can be transmitted to the integrated circuit 5 efficiently by the coiled conductive object 2 alone, on the other hand, the parallel plate capacitor 30 is not always necessary and may be omitted. In this case, the antenna characteristics in the first frequency band depend on the electrical characteristics of the integrated circuit 5 in some cases.
If the antenna performance in the first frequency band deteriorates greatly due to the electrical characteristics of the integrated circuit 5, the parallel plate capacitor 30 is loaded in parallel to the integrated circuit 5 as in FIG. 1 for the purpose of preventing the deterioration of the antenna performance in the first frequency band.
In order to maintain the resonant frequency without the parallel plate capacitor 30, the inductance of the coiled conductive object 2 needs to be reduced. This is easily accomplished by suitably changing the outside dimensions L and W of the coiled conductive object 2, the wire width of the coiled conductive object 2, and the inter-turn gap of the coiled conductive object 2.
The parallel plate capacitor 30 is an example of the capacitor that is electrically connected in parallel to the integrated circuit 5, and any part or structure that electrically has a capacitive reactance such as a chip capacitor or an interdigital capacitor can be used instead.
A method of making the wireless communication device of FIG. 1 to FIG. 3 operate favorably in the first frequency band is described next.
As described above, the integrated circuit 4 which has functions necessary for communication in the first frequency band usually has two input/output terminals (one terminal pair). In this embodiment, one of the terminals is connected to the conductive object 3 and the other terminal is connected to the conductive object 6a as illustrated in FIG. 2. The length from an end B of the conductive object 3 to an end C of the conductive object 6a is set to approximately the half wavelength of the first frequency band so that resonance characteristics are obtained in the first frequency band. This structure constitutes a half-wavelength asymmetrical dipole antenna that has the conductive object 3 and the conductive object 6a as arms and, by connecting the integrated circuit 4 between the conductors, can operate as a tag in the first frequency band. The length from the end B of the conductive object 3 to the end C of the conductive object 6a may take other values than the half wavelength as long as desired communication performance is obtained, but desirably, is set to approximately the half wavelength of the first frequency band. The arrangement of the conductive object 6a, too, does not need to be arranged as illustrated in FIG. 2 and the conductive objects 6b to 6d are unnecessary from the viewpoint of obtaining resonance characteristics in the first frequency band.
However, if the conductive object 6a is arranged in other manners than that of FIG. 2 or the conductive objects 6b to 6d are omitted, the same problem as the antenna of FIG. 31 has, which is described above in the "Technical Problem" section, is likely to arise.
Specifically, electromagnetic waves in the first frequency band that are emitted from the asymmetrical dipole antenna constituted of the conductive object 3 and the conductive object 6a are coupled with the coiled conductive object 2, causing a current in the first frequency band to flow in the coiled conductive object 2. There is a fear that a radiation field from this induced current may cancel out a radiation field from a current that flows in the asymmetrical dipole antenna, with the result that the radiation efficiency is lowered.

One method to solve the above-mentioned problem is to prevent the long-distance emission of electromagnetic waves from the current induced in the coiled conductive object 2. An idea for implementing this method with a simple structure is described below.

The coiled conductive object 2 is formed on the top face of the plate-like object 1, and the conductive object 3 and the conductive objects 6 (6a to 6d) are formed on the bottom face of the plate-like object 1. The conductive objects 6 are arranged such that, when this wireless communication device is viewed perspectively from the normal line direction of (from directly above) the plate-like object 1, most of (a half or more of) the coiled conductive object 2 overlaps with the conductive objects 6a to 6d.

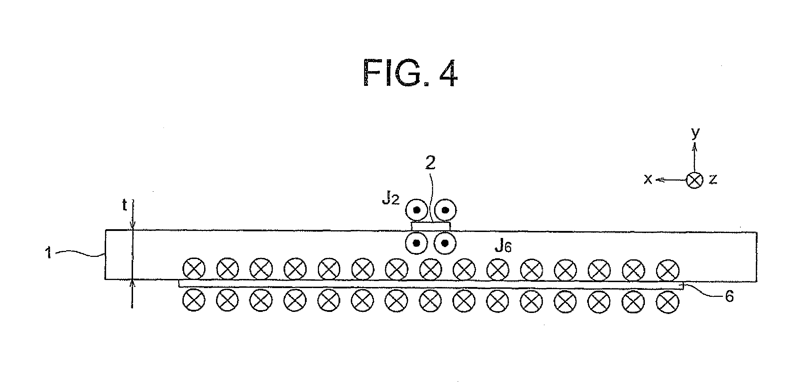

Now, referring to FIG. 4, consider electromagnetic coupling between the conductive objects 6 and the coiled conductive object 2, currents that flow in the former and latter conductive objects, and radiation from the currents. An electric field generated from an infinitesimal current element that has a moment Il directed in a direction z is obtained in normal polar coordinates by, as is well known, the following Expressions (5) and (6).

## Mathematical Expression 1

$$E_r = \frac{Il}{2\pi} e^{-jkr} \eta k^2 \left( \frac{1}{(kr)^2} + \frac{1}{j(kr)^3} \right) \cos\theta \qquad \ldots(5)$$

$$E_\theta = \frac{Il}{4\pi} e^{-jkr} \eta k^2 \left( \frac{1}{(kr)} + \frac{1}{(kr)^2} + \frac{1}{j(kr)^3} \right) \sin\theta \qquad \ldots(6)$$

In the expressions given above, $E_r$ represents an r-direction component of the electric field vector, $E_\theta$ represents a θ-direction component of the electric field vector, j represents an imaginary unit, η represents a wave impedance, k equals $2\pi/\lambda$ and represents the wave number, λ represents the wavelength, r represents the distance from the infinitesimal current element to the observation point, and θ represents an angle formed between the z axis and the observation direction vector r.

In the Expressions (5) and (6), terms that are in proportion to 1/(kr), 1/(kr)2 , and 1/(kr)3 are called a radiation field, an induction field, and a quasi electrostatic field, respectively. When kr is 1, these three types of fields have an equal intensity. In the domain where kr is much greater than 1, the radiation field is dominant. In the domain where kr is much less than 1, the quasi electrostatic field is dominant.

In the case where this wireless communication device is made into a card form to be provided for practical use, a thickness t of the plate-like object 1 needs to be equal to or smaller than the thickness defined by regulations. The thickness t is set to 100 μm or less in non-contact IC cards that have been put into practical use. In UHF-band passive RFID tags which uses the global frequency band having the center frequency around 910 MHz, kt expressed by $1.9 \times 10^{-3}$ is accordingly much less than 1 and the quasi electrostatic field is dominant.

An electric field created by a current $J_6$, which flows in the conductive objects 6, above the coiled conductive object 2 is therefore expressed approximately by the following Expression (7).

## Mathematical Expression 2

$$E_z \cong -\frac{J_6}{4\pi} e^{-jkr} \eta k^2 \frac{1}{j(kt)^3} \qquad \ldots(7).$$

If the coiled conductive object 2 is treated as a perfect conductor (conductor that has a conductivity of ∞), on the other hand, a tangent component of the electric field must be zero on the surface of the coiled conductive object 2 and, therefore, a current that satisfies this boundary condition, namely, a current indicated by $J_2$ in FIG. 4, is induced to flow over the surface of the coiled conductive object 2.

The image theory can be applied approximately to radiation from the current $J_2$ induced in the coiled conductive object 2, if the width of the conductive objects 6 is wide relative to the thickness t of the plate-like object 1.

Specifically, an image current $-J_2$ is placed at a position (y = -t) symmetrical to the position of $J_2$ (y = t) of FIG. 4 with respect to the conductive objects 6, and the radiation is considered as an overlap between a radiation field Ea from the original current $J_2$ and a radiation field Eb from the image current $-J_2$. The distance 2t between the original current $J_2$ and the image current $-J_2$ is sufficiently shorter than the wavelength, and Ea and Eb are therefore substantially cancelled out in all directions.

It is concluded from the above-mentioned speculation that, although a current is induced in the coiled conductive object 2 by electromagnetic coupling between the conductive objects 6 and the coiled conductive object 2, because a radiation field from the current does not cancel out a radiation field from an antenna current flowing in the conductive objects 6, high radiation efficiency is accomplished.

In the case where the width of the conductive objects 6 is narrow, for example, as narrow as the conductor width of the coiled conductive object 2, the image theory described above cannot be applied even approximately. The conductive objects 6 and the coiled conductive object 2 in this case are surmised to operate like parallel two wires, and a radiation field from a current flowing in the conductive objects 6 is cancelled out by a radiation field from a current flowing in the coiled conductive object 2, thereby causing a significant drop in radiation efficiency. It is therefore desirable to make the conductive objects 6 sufficiently wider than the coiled conductive object 2.

The conductive objects 6, which, in FIG. 2, are four physically separate objects 6a to 6d, may be connected to one another as appropriate as long as desired communication performance is obtained in the first frequency band and the second frequency band. For instance, the conductive objects 6c and 6d may be connected to each other by circumventing the conductive object 7b, or the conductive objects 6c and 6d may be connected to each other. However, connecting all of the conductive objects 6a to 6d forms an electrically closed circuit, which increases effects to the second frequency band and therefore is not desirable.

The conductive object 3 may be arranged in other ways than the one illustrated in FIG. 2 as long as desired communication performance is obtained in the first frequency band. Desirably, however, the conductive object 3 is arranged such that, when this wireless communication device is viewed perspectively from the normal line direction of the plate-like object 1, the conductive object 3 is outside the coiled conductive object 2.

It is also not always necessary to form the conductive object 3 on the bottom face of the plate-like object 1, and forming the conductive object 3 outside of the coiled conductive object 2 on the top face of the plate-like object 1 obviously poses no problems from the viewpoint of electrical characteristics.

Specifically, an end of the conductive object 3 on the top face of the plate-like object 1 is connected to one terminal of the integrated circuit 4 on the bottom face of the plate-like object 1 through an interlayer connection portion identical to the interlayer connection portions 8a and 8b. Whether to form the conductive object 3 on the top face of the plate-like object 1 or the bottom face of the plate-like object 1 can be determined as appropriate, taking producibility into consideration.

The conductive object 3, which is a thin line in the example of FIG. 2, may also have other shapes than a thin-line shape such as circular, elliptical, and polygonal shapes.

In order to verify the effectiveness of the antenna structure of FIG. 1 to FIG. 3, the inventors of the present invention performed a numerical electromagnetic analysis. A basic examination model which was a simplified version of the structure of FIG. 1 to FIG. 3 was fabricated, and the model's antenna characteristics in the first frequency band were calculated by setting the number of turns of the coiled conductive object 2 to six, the width and length of the conductive object 3 to $0.0032 \lambda_1$ and $0.254 \lambda_1$, respectively, W of the coiled conductive object 2 to $0.14 \lambda_1$, L of the coiled conductive object 2 to $0.121 \lambda_1$, $0.143 \lambda_1$, $0.168 \lambda_1$, and $0.194 \lambda_1$.

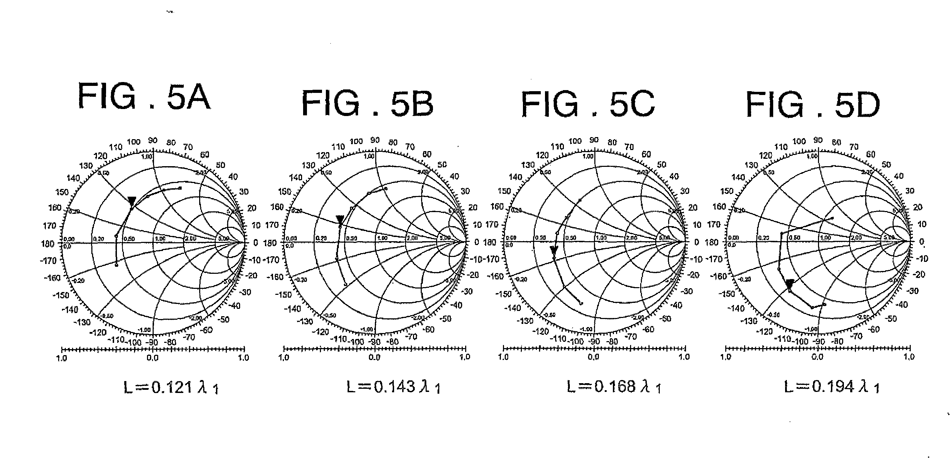

FIGs. 5A, 5B, 5C, and 5D are characteristics diagrams illustrating the impedance-frequency characteristics Z1 which are seen from an input/output terminal of the integrated circuit 4 to the antenna side. Values of FIGs. 5A to 5D are impedance values normalized by 50 Ohm.

In FIGs. 5A to 5D, the impedance-frequency characteristics Z1 are plotted on the Smith chart over five points from $0.894 f_1$ to $1.106 f_1$ at intervals of $0.053 f_1$. As is clear from the impedance-frequency characteristics Z1 of FIGs. 5A to 5D, the antenna structure of FIG. 1 to FIG. 3 is smaller in resistance and larger in the amount of reactance change than a half-wavelength dipole antenna put in a free space. In other words, this antenna structure exhibits similar impedance characteristics (series resonance characteristics) despite being for a narrow bandwidth.

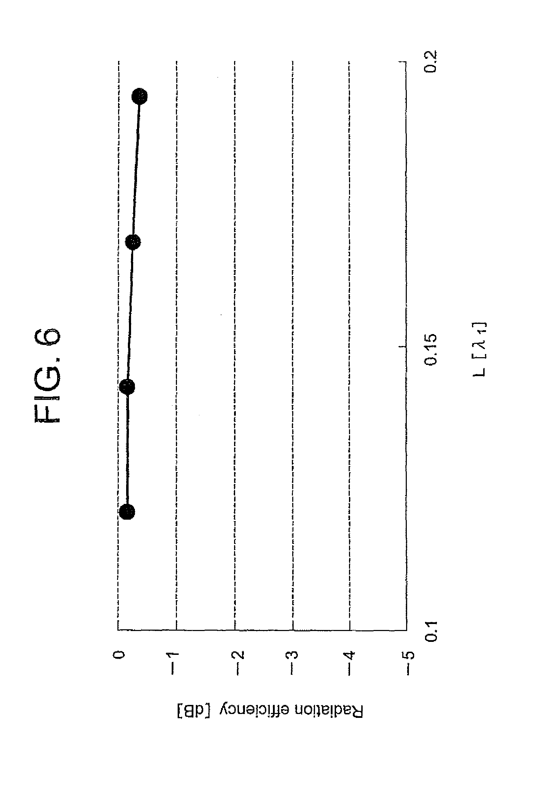

FIG. 6 illustrates radiation efficiency. The graph shows that the dependence of the radiation efficiency on the length L of the coiled conductive object 2 is very small and that a very high radiation efficiency, approximately -0.4 dB or higher, is obtained.

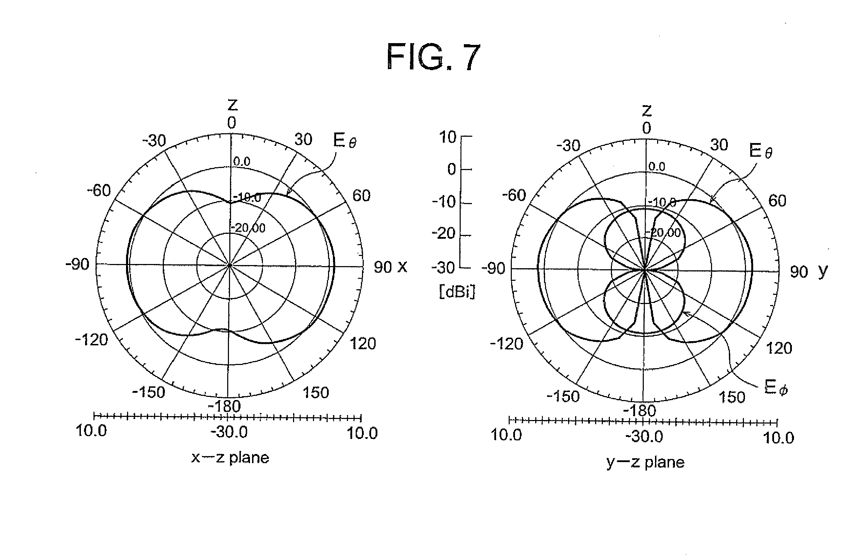

FIG. 7 is a diagram illustrating the result of calculating the x-z plane radiation pattern and y-z plane radiation pattern in the form of main polarized wave (Eθ component) and cross polarized wave (EΦ component). As is clear from FIG. 7, the radiation pattern obtained with the antenna structure of FIG. 1 to FIG. 3 is similar to that of a half-wavelength dipole antenna, and the gain in a direction perpendicular to the plate-like object I is approximately 2 dBi. The cross polarized wave (EΦ component) generated in the y-z plane is not large enough that invites a reduction in the gain of the main polarized wave (Eθ component), and does not pose a problem in putting the antenna structure into practical use as a tag antenna. Those examination results confirm the effectiveness of this embodiment with respect to the first frequency band.

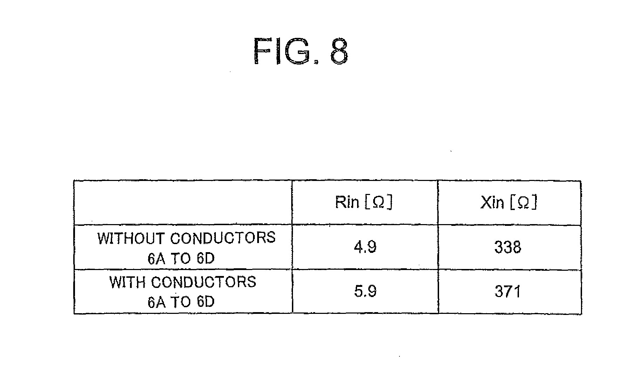

Table 1 of FIG. 8 shows the result of calculating the input impedance of the coiled conductive object 2 at the second frequency to compare an impedance calculation result with the conductive objects 6 for the first frequency and an impedance calculation result without the conductive objects 6 for the first frequency. It is understood from this result that, although the input impedance of the coiled conductive object 2 differs when the conductive objects 6 are provided and when the conductive objects 6 are not provided, the difference is relatively small and does not have significant adverse effects.

In the case where the resonant frequency observed when the conductive objects 6 are not provided is to be maintained, the inductance of the coiled conductive object 2 needs to be reduced. This is easily accomplished by changing as appropriate the outside dimensions L and W of the coiled conductive object 2, the wire width of the coiled conductive object 2, and the inter-turn gap of the coiled conductive object 2.

It is concluded from the above-mentioned speculation and examination results that the wireless communication device of FIG. 1 to FIG. 3 can secure a wider mounting area for the first frequency-band antenna and the second frequency-band antenna each than in the case where the first frequency-band antenna and the second frequency-band antenna are placed side by side on the same face. This wireless communication device is consequently capable of the same level of communication performance as when the first frequency-band antenna and the second frequency-band antenna are provided as separate devices.

The electrical length of the conductive object 3 may be other lengths than the effective wavelength of the first frequency band as long as high communication performance is obtained in the first frequency band, but is often set to approximately an effective wavelength $\lambda_{1e}$ of the first frequency band or less. The effective wavelength $\lambda_{1e}$ of the first frequency band is a value that is obtained by taking into account electrical effects from objects disposed around the conductive object 3, such as the plate-like object 1 and other surrounding objects (not shown).

The impedance of the integrated circuit 4 used in an RFID tag is generally low in resistance and high in capacitive reactance. Therefore, the antenna impedance of FIGs. 5 is inconvenient for impedance matching between the antenna and the integrated circuit 4 in some cases.

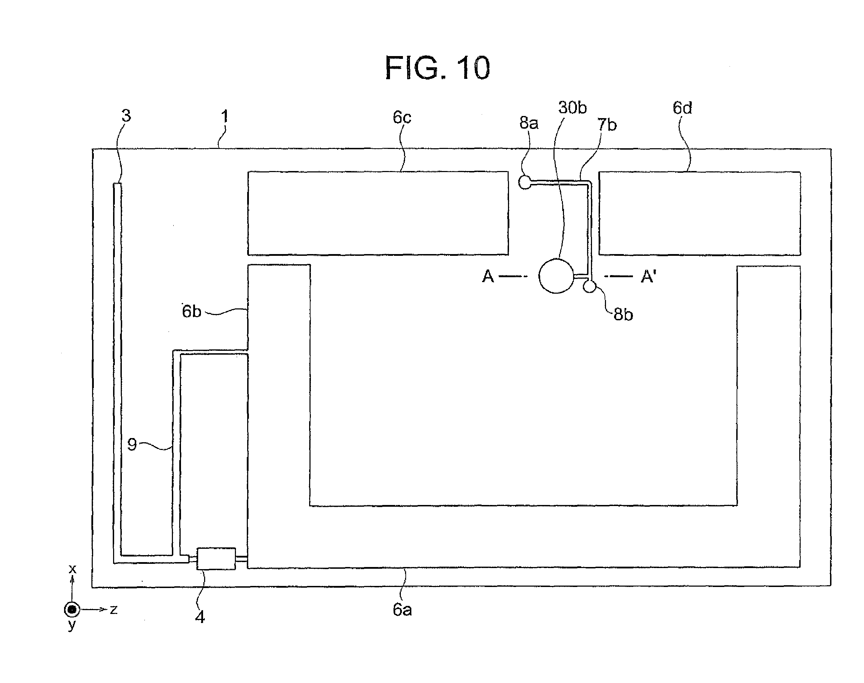

This inconvenience can be dealt with by, for example, providing a conductive object (third conductive object) 9 on the bottom face of the plate-like object 1 as illustrated in the plan view of FIG. 10. An end of the conductive object 9 is connected to the conductive object 3, the other end of the conductive object 9 is connected to the conductive object 6b, and the conductive object 6a and the conductive object 6b are connected to each other, thereby constituting a so-called short stub.

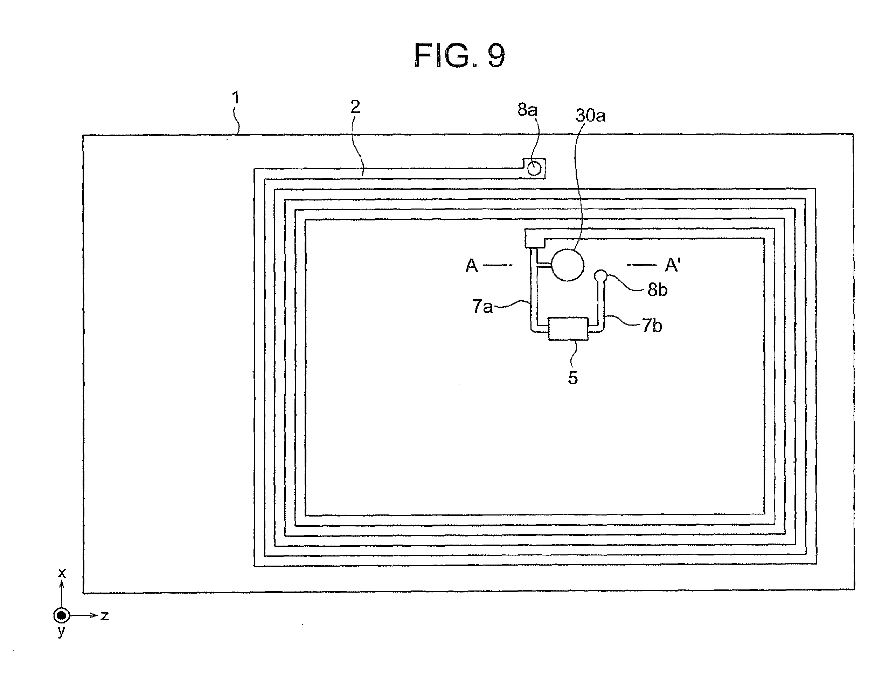

In FIG. 9 and FIG. 10, the same components as those described above (with reference to FIG. 1 to FIG. 3) are denoted by the same reference symbols to omit their detailed descriptions. This structure is same as that described above (with reference to FIG. 1 to FIG. 3) except that the conductive object 9 is added, and that the conductive object 6a and the conductive object 6b are connected to each other.

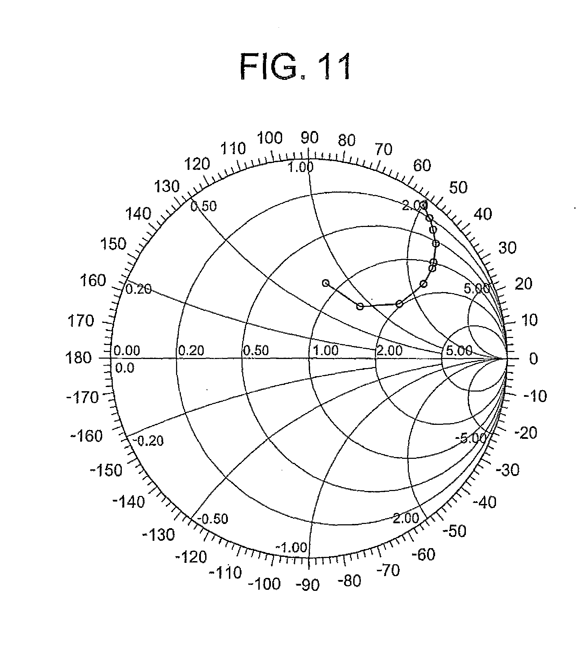

By employing the antenna structure of FIG. 9 and FIG. 10 and setting as appropriate the shape and length of the conductive object 3 and the lengths of the conductive objects 6, the impedance of a desired frequency band can be changed to one close to an impedance that has a complex conjugate relation with the impedance of the integrated circuit 4 as indicated by impedance-frequency characteristics Z2 of FIG. 11. An impedance match between the antenna and the integrated circuit 4 is thus ensured. In FIG. 11, plotted frequencies of the impedance-frequency characteristics Z2 are indicated over nine points from 0.96 $f_1$ to 1.04 $f_1$ at intervals of 0.01 $f_1$.

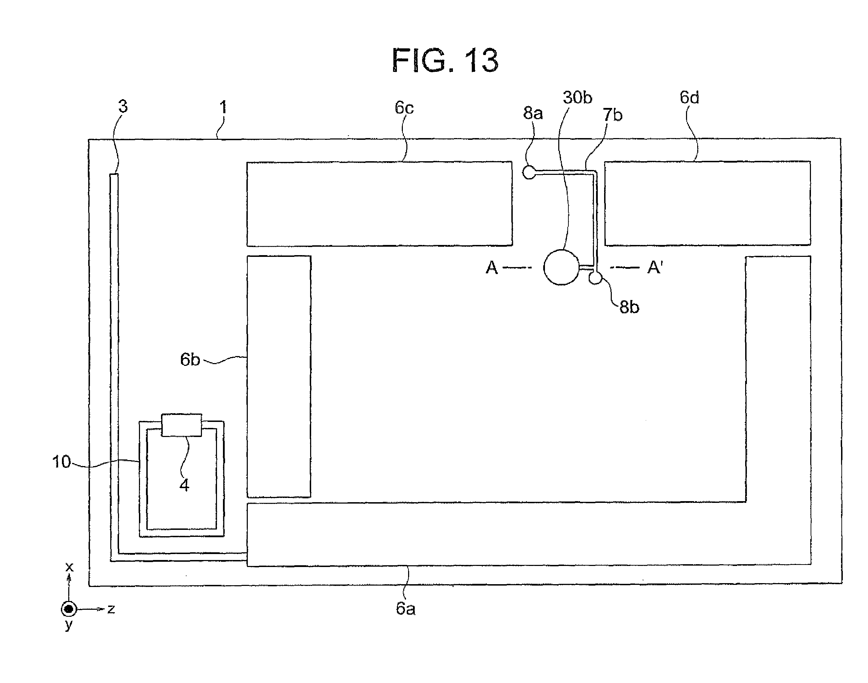

The impedance matching method that can be employed is not limited to the short stub of FIG. 10. Other conceivable measures include, for example, an antenna structure illustrated in the plan view of FIG. 13, where a conductive object (fourth conductive object) 10 having the shape of a closed loop is provided on the bottom face of the plate-like object 1 and the integrated circuit 4 is inserted in a part of the conductive object 10.

In FIG. 13, the integrated circuit 4 is isolated from the conductive object 3. The conductive object 10 is disposed in the vicinity of the conductive objects 6 and/or the conductive object 3 (at least one of the conductive object 3 and the conductive objects 6). One end of the conductive object 10 is connected to one terminal of the integrated circuit 4, and the other end of the conductive object 10 is connected to the other terminal of the integrated circuit 4. The conductive object 3 is connected to the conductive object 6a.

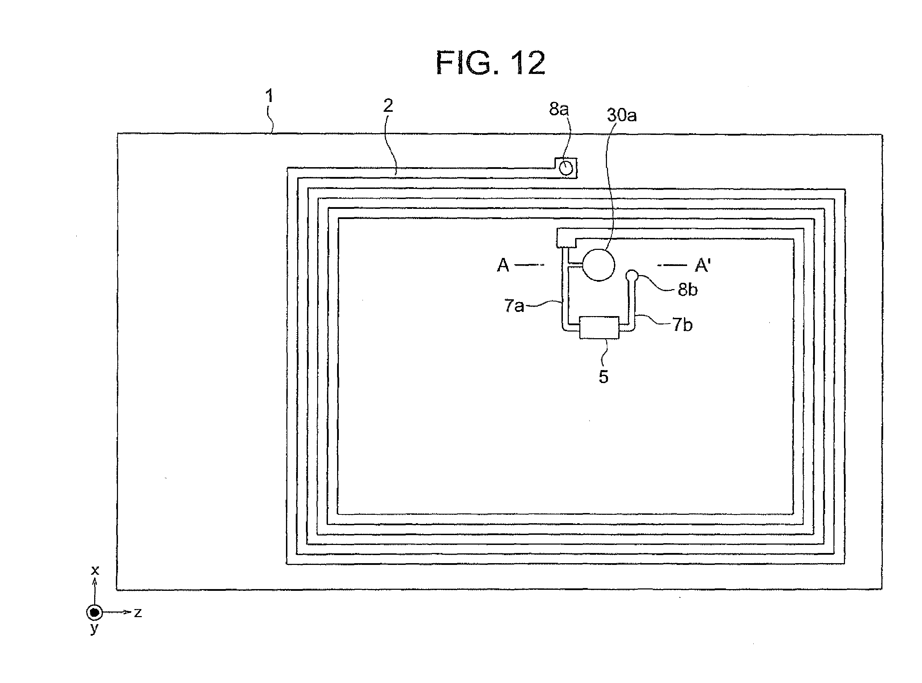

In the antenna structure of FIG. 12 and FIG. 13, a magnetic field that is generated from a current flowing in the conductive objects 6 and the conductive object 3 penetrates the space within the loop of the conductive object 10 and, through this magnetic field, a circuit constituted of the integrated circuit 4 and the conductive object 10 is coupled to an antenna constituted of the conductive object 3 and the conductive objects 6.

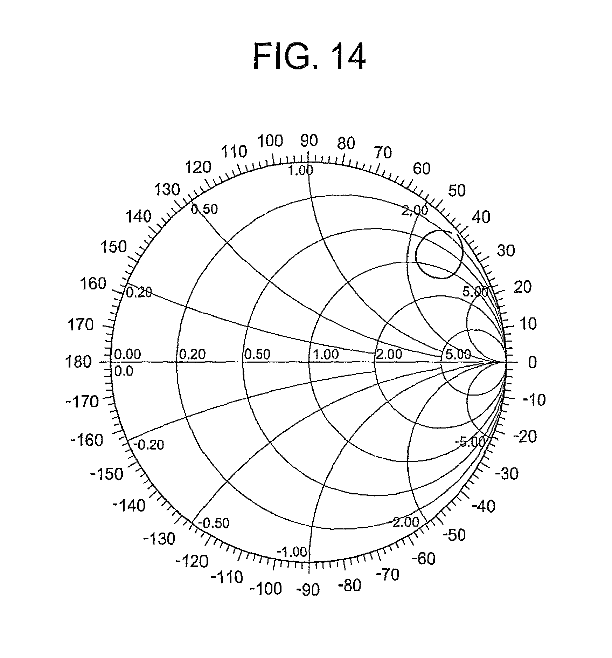

FIG. 14 is a characteristics diagram illustrating the result of calculating impedance-frequency characteristics Z3, which are obtained with the antenna structure of FIG. 12 and FIG. 13. In FIG. 14, plotted frequencies of the impedance-frequency characteristics Z3 are indicated over twenty-one points from 0.95 $f_1$ to 1.05 $f_1$ at intervals of 0.005 $f_1$. As is

clear from FIG. 14, antenna impedance characteristics suitable for ensuring an impedance match with the integrated circuit 4 are obtained by employing the antenna structure of FIG. 12 and FIG. 13.

The conductive object 10 may be in contact with the conductive object 3 and/or the conductive objects 6. In this limit state in which the distance from the conductive object 10 to the conductive object 3 and/or the conductive objects 6 is zero, the structure is surmised to operate as an antenna in the same manner that is described above.

As described above, according to the first embodiment of the present invention, a wireless communication device having an RFID tag function applicable to both an LF-band RFID system (or an HF-band RFID system) and a UHF-band RFID system is obtained that secures as large a mounting area as possible for an antenna of one frequency band and an antenna of the other frequency band each, and that has a communication range equal to the communication range of a tag for an LF-band RFID system (or an HF-band RFID system) alone and the communication range of a tag for a UHF-band RFID system alone.

Second Embodiment

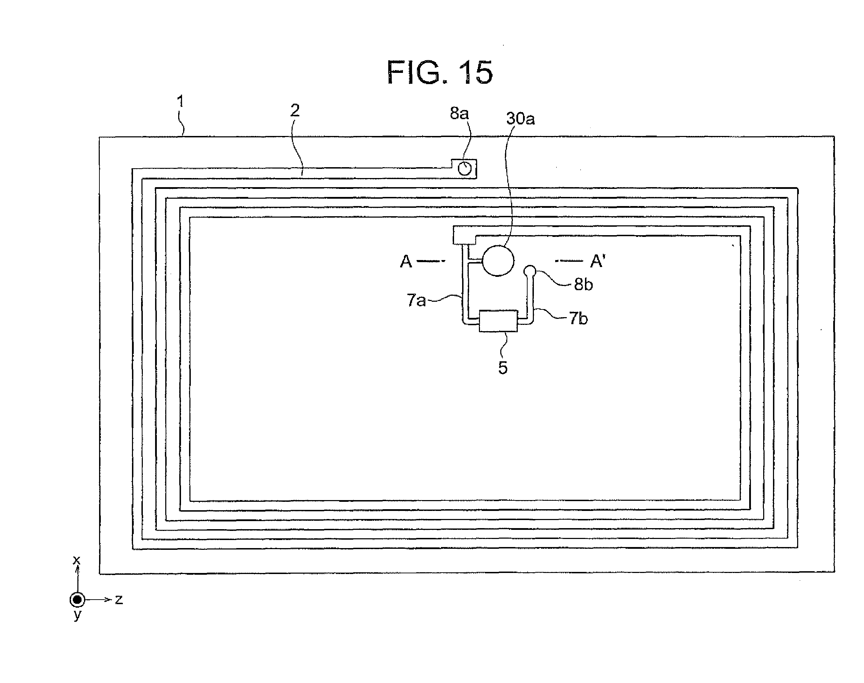

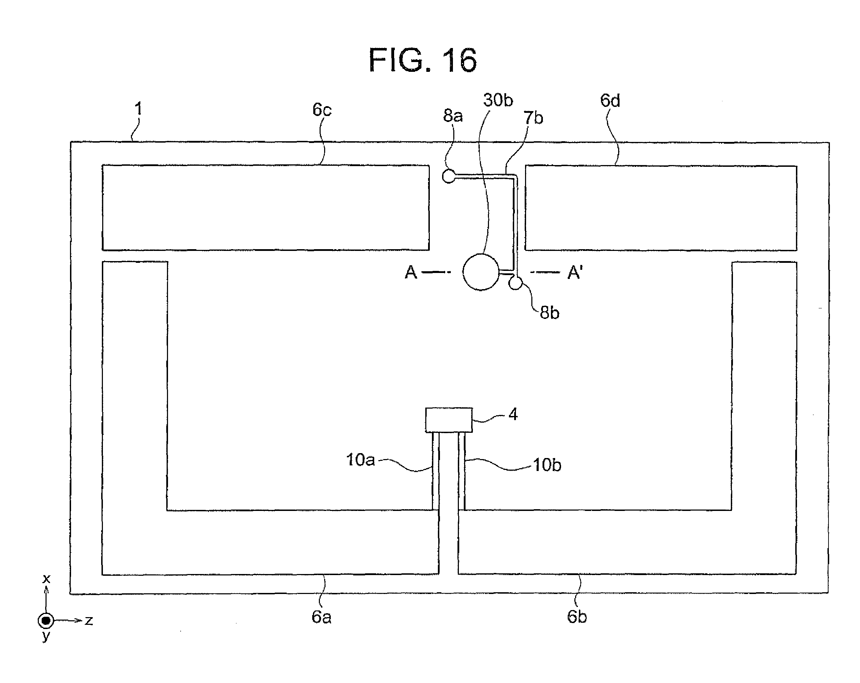

A wireless communication device according to a second embodiment of the present invention is described with reference to FIG. 15 to FIG. 22. FIG. 15 and FIG. 16 are diagrams illustrating the structure of the wireless communication device according to the second embodiment of the present invention.

In order to enhance the communication performance in the second frequency band, it is basically preferred to give the coiled conductive object 2 a wide opening area. On the other hand, in order to enhance the communication performance in the first frequency band in the antenna structure of the first embodiment (FIG. 1 and FIG. 2, FIG. 9 and FIG. 10, and FIG. 12 and FIG. 13), it is desirable to place the conductive object 3 outside the coiled conductive object 2. Those are conflicting requirements and meeting both requirements is difficult. Specifically, in the first embodiment where the coiled conductive object 2 cannot have a maximum opening area within the plate-like object 1, it is difficult to maximize the communication performance in the second frequency band.

However, if one acknowledges that high communication performance can be obtained in the first frequency band and the second frequency band both based on the principle speculated in the first embodiment, an antenna structure that has high communication performance in both frequency bands is conceivable even when the coiled conductive object 2 has a maximum opening area within the plate-like object 1. How to accomplish this is described below.

In FIG. 15 and FIG. 16, components that are the same or have the same roles as the components in the first embodiment are denoted by reference numerals that are the same as or similar to the ones used in the first embodiment. Differences from the first embodiment are described below.

The coiled conductive object 2 in FIG. 15 is provided in a manner that gives the coiled conductive object 2 a maximum opening area within the plate-like object 1. As in the first embodiment, the conductive objects 6 are arranged such that, when this wireless communication device is viewed perspectively from the normal line direction of (from directly above) the plate-like object 1, the coiled conductive object 2 mostly overlaps with the conductive objects 6a to 6d. The conductive objects 6 are arranged in this manner for the reason described in the first embodiment. Between two (the conductive object 6a and the conductive object 6b in FIG. 16) of the conductive objects 6, which are a plurality of separate conductive objects, the integrated circuit 4 is connected via a conductive object (fifth conductive object) 10a and a conductive object (sixth conductive object) 10b. By setting the lengths of the conductive object 6a and the conductive object 6b suitably, this structure operates as a dipole antenna having the conductive objects 6a and 6b as arms.

The structure basically resonates in the first frequency band when a length $L_{ab}$, which is the sum of the lengths of the conductive object 6a and the conductive object 6b, is set to approximately $\lambda_1/2$. However, setting $L_{ab}$ to approximately $\lambda_1/2$ has a fear that an impedance match cannot be ensured between the integrated circuit 4 and the dipole antenna constituted of the conductive objects 6a and 6b. In this case, an impedance match with the integrated circuit 4 is ensured by suitably setting the lengths of the conductive object 6a and the conductive object 6b, and the lengths of and the gap between the conductive object 10a and the conductive object 10b.

The structure in which the conductive objects 6 operate as a dipole antenna in the first frequency band is not limited to the structure illustrated in FIG. 16.

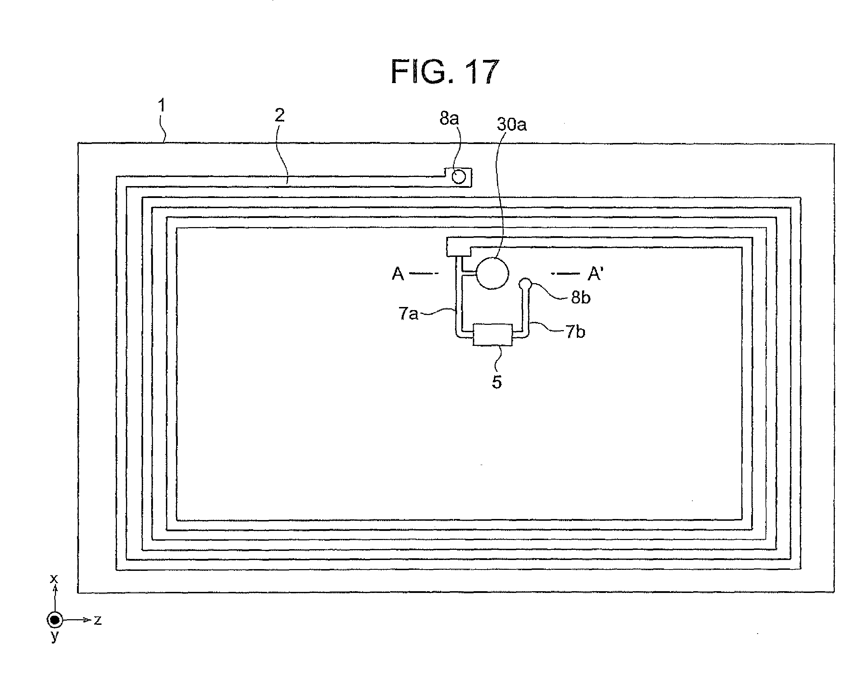

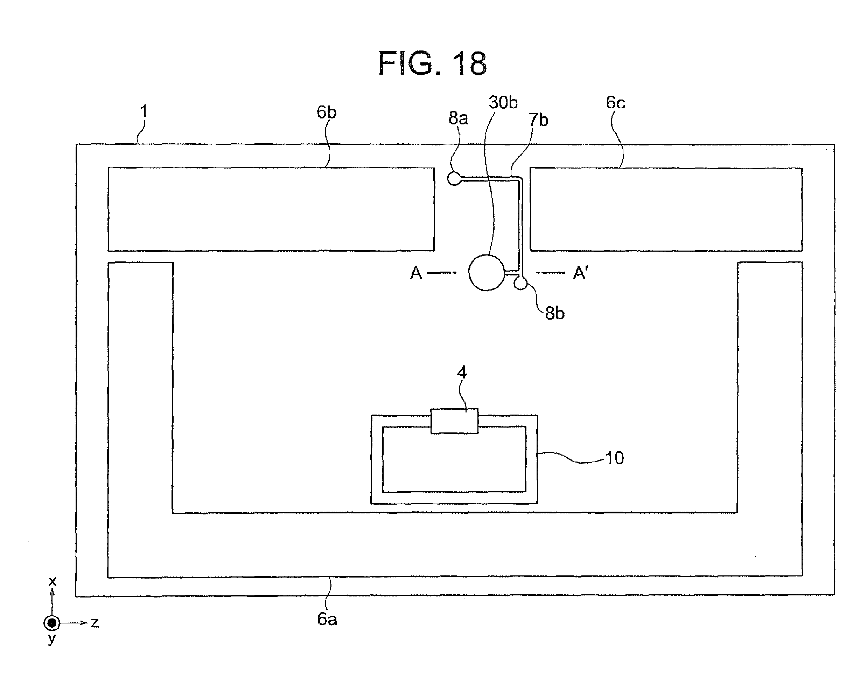

FIG. 17 and FIG. 18 are plan views illustrating a first alternative structure of the wireless communication device according to the second embodiment of the present invention.

In FIG. 18, the conductive object 6a and the conductive object 6b of FIG. 16 are connected and the resultant conductive object is redefined as the conductive object 6a. The conductive object 10 to which the integrated circuit 4 is connected is disposed in the vicinity of the conductive object 6a of FIG. 18.

With the structure of FIG. 17 and FIG. 18, a magnetic field that is generated from a current flowing in the conductive object 6a penetrates the space within the loop of the conductive object 10 as in the first embodiment and, through this magnetic field, a circuit constituted of the integrated circuit 4 and the conductive object 10 is coupled to an antenna constituted of the conductive object 6a. This structure thus operates as a tag antenna in the first frequency band.

The structure basically resonates in the first frequency band when a length $L_a$ of the conductive object 6a is set to approximately $\lambda_1/2$. An impedance match with the integrated circuit 4 is accomplished by optimizing the length $L_a$ and the shape, size, and position of the conductive object 10.

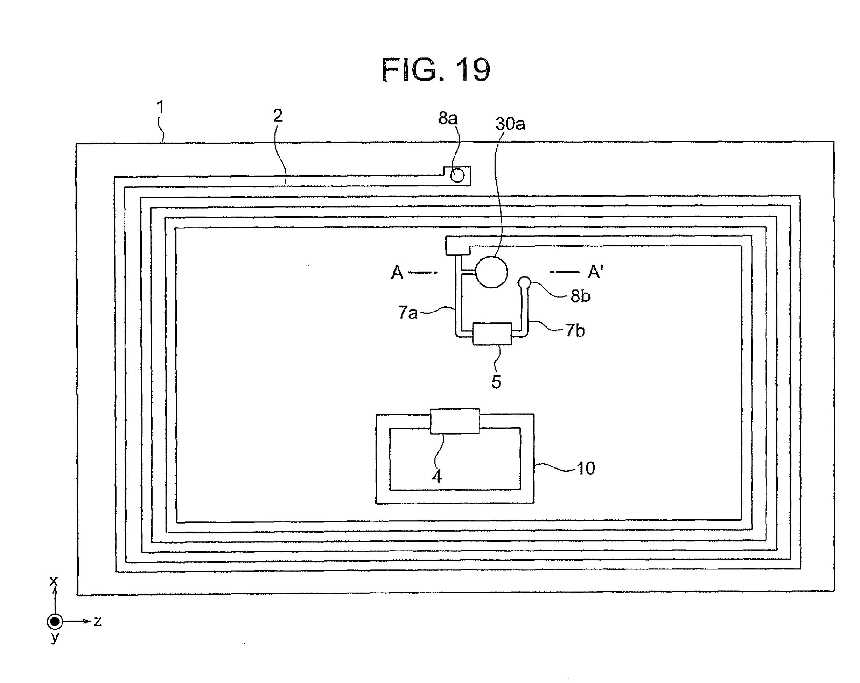

The conductive object 10 to which the integrated circuit 4 is connected is placed on the bottom face of the plate-like object 1 in FIG. 18. However, placing the conductive object 10 on the top face of the plate-like object 1 in the manner illustrated in FIG. 19 does not change the operation of the structure as an antenna. This way, the integrated circuit 4 and the integrated circuit 5 can be formed on the same face of the plate-like object 1, which facilitates manufacture.

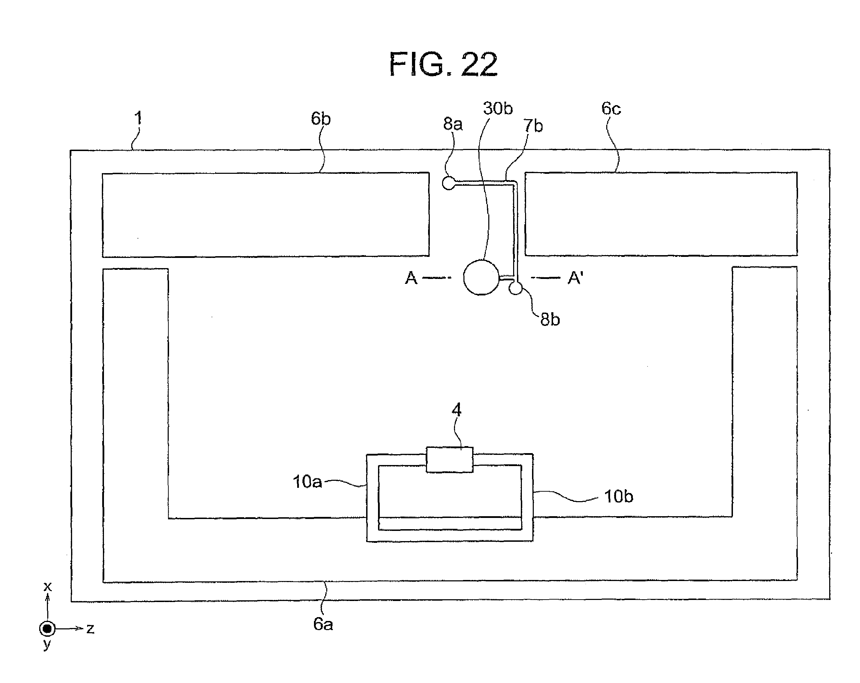

As already described in the first embodiment, the conductive object 10 of FIG. 18 does not need to be separated from the conductive object 6a and, from the principle of operation, connecting the conductive objects 10 (10a and 10b) to the conductive object 6a in the manner illustrated in FIG. 22 does not pose any problems.

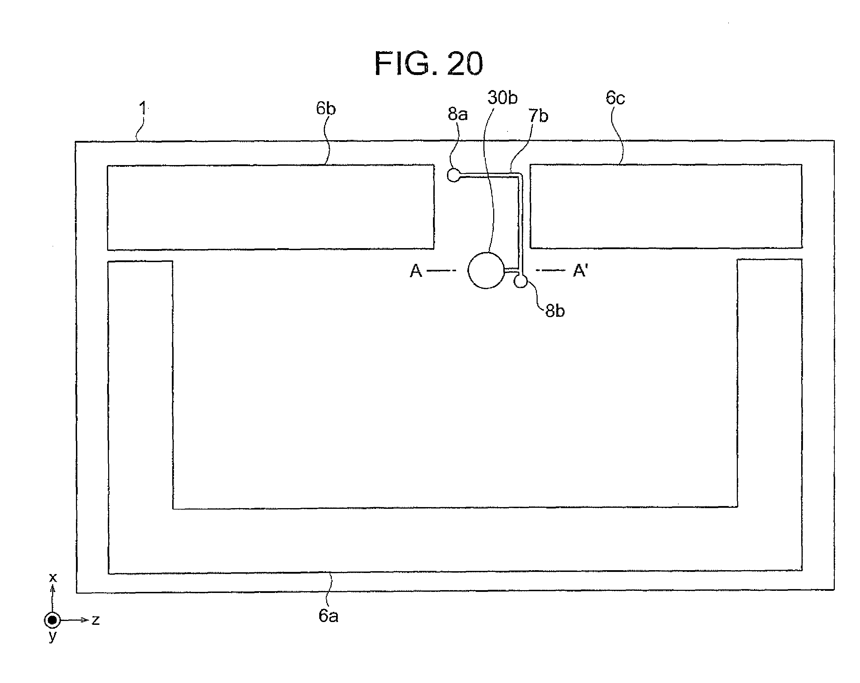

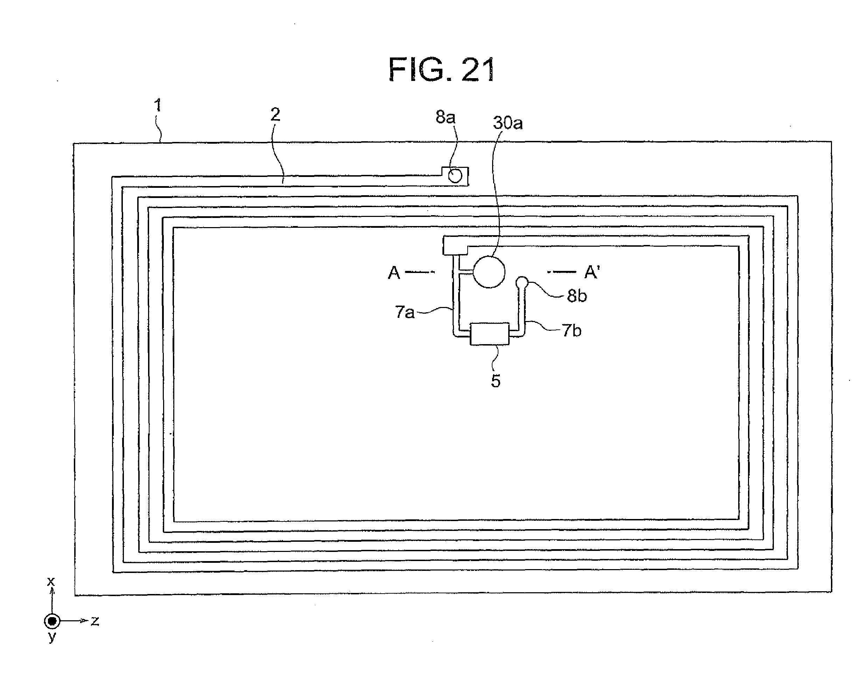

An optimum mode can be chosen from the structure of FIG. 15 and FIG. 16, the structure of FIG. 17 and FIG. 18, the structure of FIG. 19 and FIG. 20, and the structure of FIG. 21 and 22 by weighing the structures in every respect including the ease of design, producibility, and communication performance.

Third Embodiment

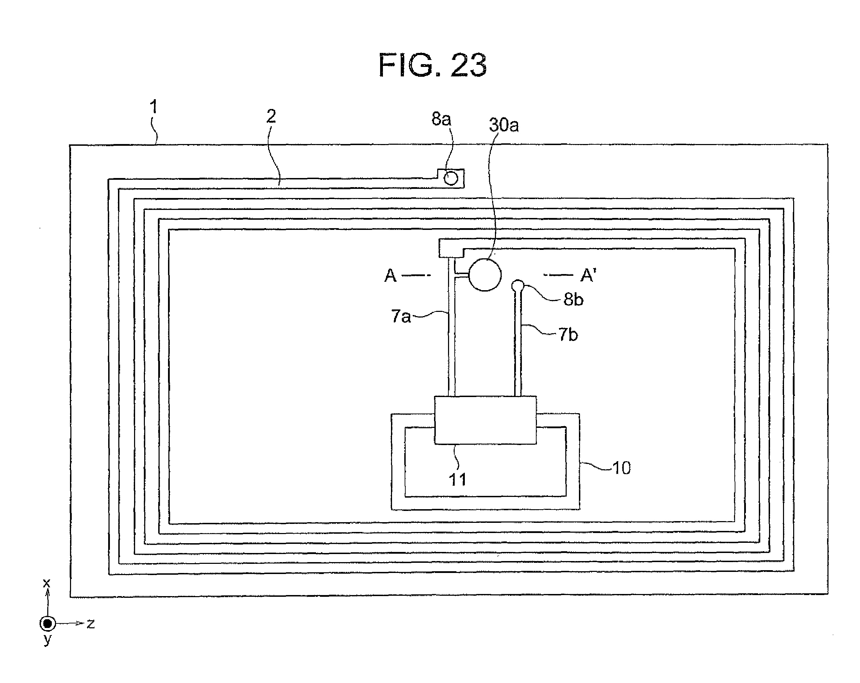

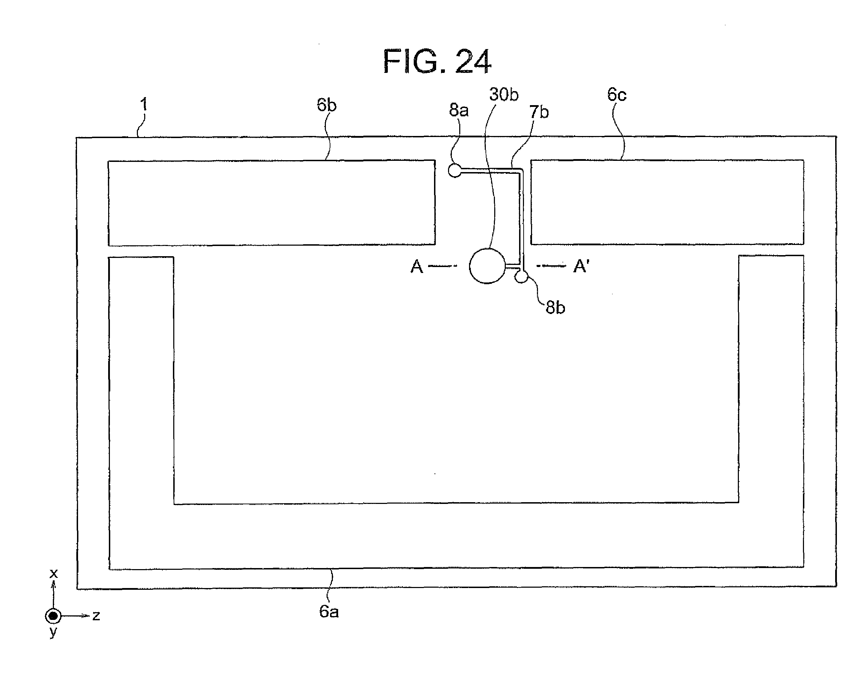

A wireless communication device according to a third embodiment of the present invention is described with reference to FIG. 23 to FIG. 30. FIG. 23 and FIG. 24 are diagrams illustrating the structure of the wireless communication device according to the third embodiment of the present invention.

The first embodiment and the second embodiment require one integrated circuit for each frequency band, namely, the integrated circuit 4 which has functions necessary for communication in the first frequency band and the integrated circuit 5 which has functions necessary for communication in the second frequency band. In recent years, multi-frequency integrated circuits which have communication functions necessary for different frequency bands in combination are beginning to be put into practical use. This embodiment describes an antenna structure compatible with those multi-frequency integrated circuits.

FIG. 23 and FIG. 24 illustrate an antenna structure for using an integrated circuit 11, which has functions necessary for communication in the first frequency band and the second frequency band both. The integrated circuit 11 here has two input/output terminals (one terminal pair) for transmitting/receiving signals in the first frequency band and two input/output terminals (one terminal pair) for transmitting/receiving signals in the second frequency band, four input/output terminals in total.

The conductive object 10 is connected to the input/output terminal pair for the first frequency band (first input/output terminal pair), and the conductive objects 7 (7a and 7b) are connected to the input/output terminal pair for the second frequency band (second input/output terminal pair). If isolation is high between a circuit relevant to the first frequency band and a circuit relevant to the second frequency band within the integrated circuit 11, the structure of FIG. 23 and FIG. 24 can reach high communication quality in the first frequency band and the second frequency band with the single integrated circuit 11 alone.

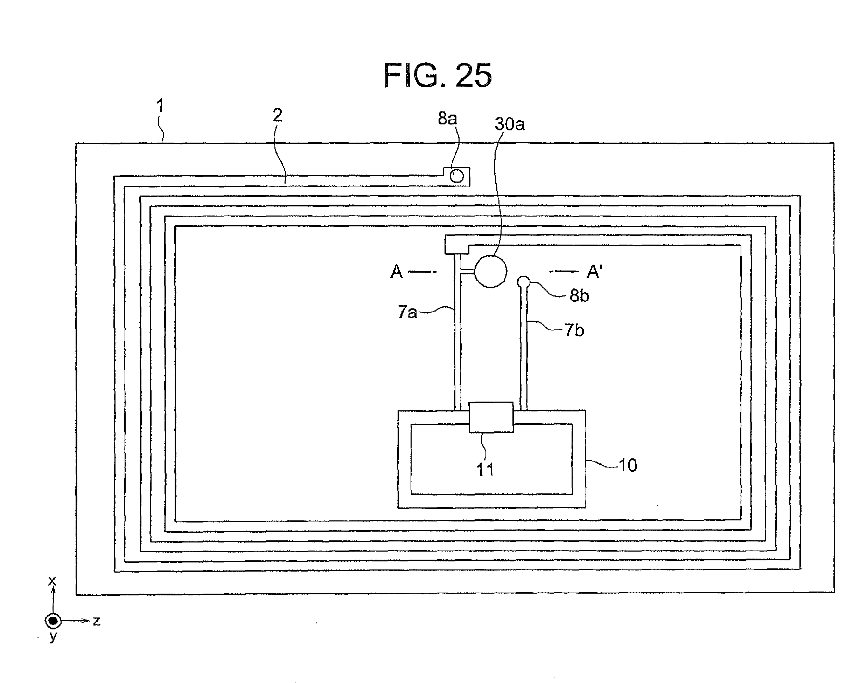

In other cases, the input/output terminal pair for the first frequency band and the input/output terminal pair for the second frequency band are the same, in short, the integrated circuit 11 has only two terminals (one terminal pair). Then, simply connecting the components in the manner illustrated in FIG. 25 does not ensure that high communication quality is obtained in both frequency bands.

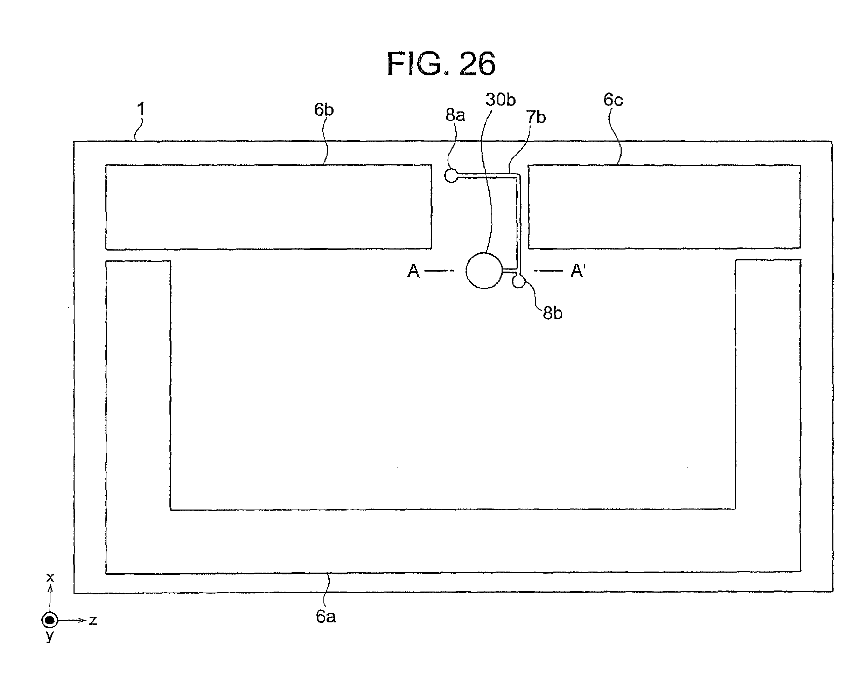

For instance, consider a circuit structure illustrated in FIG. 25 and FIG. 26. In FIG. 25, the conductive objects 7 which are connected to the coiled conductive object 2 and the conductive object 10 which acts as a feeder circuit for the first frequency band are both connected to the input/output terminal pair of the integrated circuit 11.

In the first frequency band, an impedance seen from the input/output terminal pair of the integrated circuit 11 to the coiled conductive object 2 is substantially infinite (electrically open) if the distance from the input/output terminal pair of the integrated circuit 11 to the parallel plate capacitor 30 is approximately an odd multiple of $\lambda_1/4$. It is therefore surmised that adverse effects of the characteristics of the second frequency-band circuit to the characteristics of the first frequency-band antenna are small.

In the second frequency band, on the other hand, an impedance seen from the input/output terminal pair of the integrated circuit 11 to the conductive object 10 is substantially zero (electrically short-circuited). Accomplishing high communication quality in the second frequency band is therefore difficult without modifications.

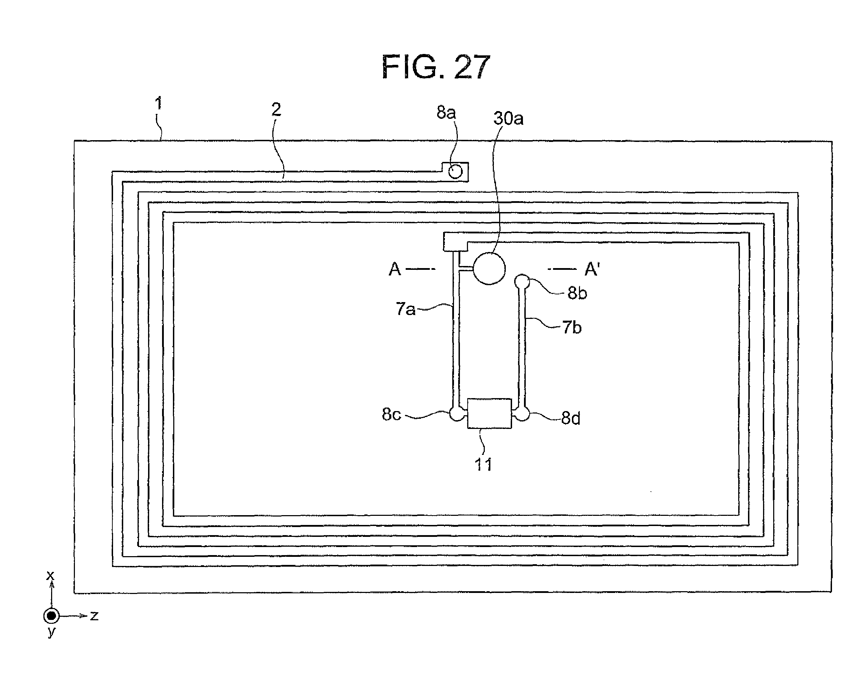

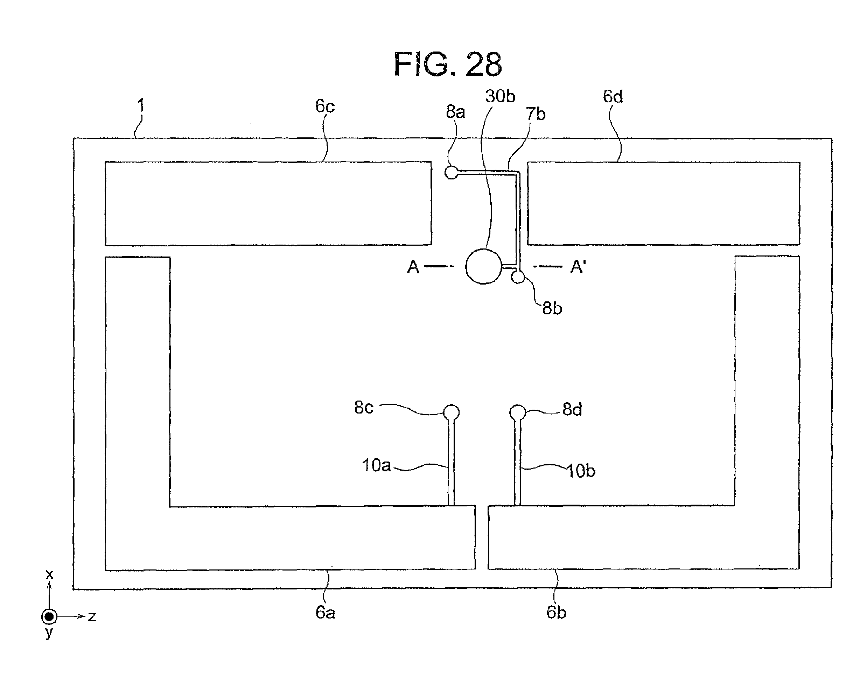

In this case, the structure of FIG. 16 is selected as the first frequency-band antenna structure and a structure of FIG. 27 and FIG. 28 is employed. In FIG. 27 and FIG. 28, the input/output terminal pair of the integrated circuit 11 and the conductive objects 10 (10a and 10b) are connected by interlayer connection portions 8c and 8d. In the case where the first frequency band is sufficiently higher than the second frequency band, the conductive objects 10 and the conductive objects 6 are sufficiently shorter than a wavelength $\lambda_2$ in the second frequency band, and the impedance seen from the input/output terminal pair of the integrated circuit 11 to the conductive objects 10 is substantially infinite (electrically open) in the second frequency band. Consequently, connecting the first frequency-band antenna which is constituted of the conductive objects 10 and the conductive objects 6 to the integrated circuit 11 does not adversely affect communication characteristics in the second frequency band.

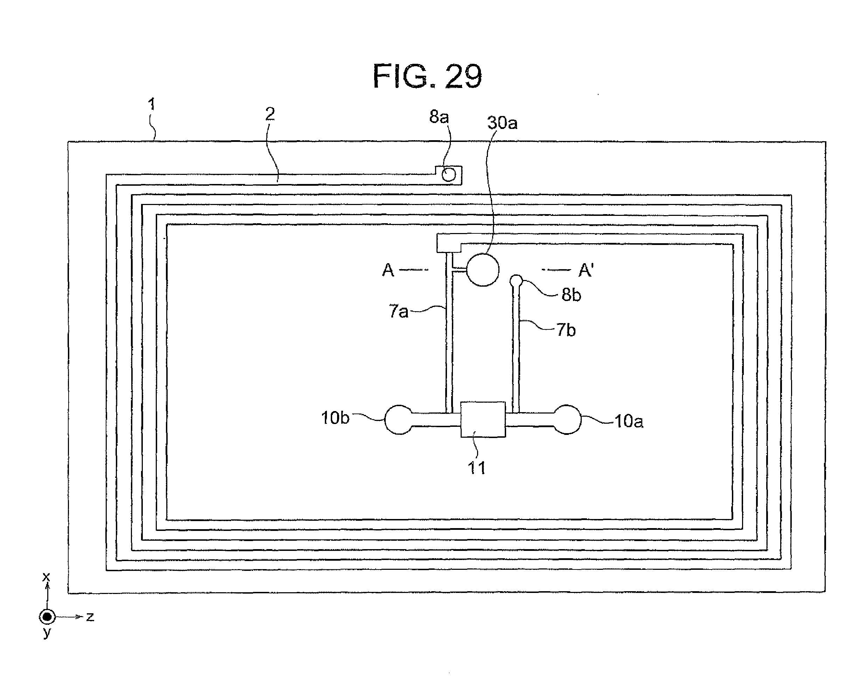

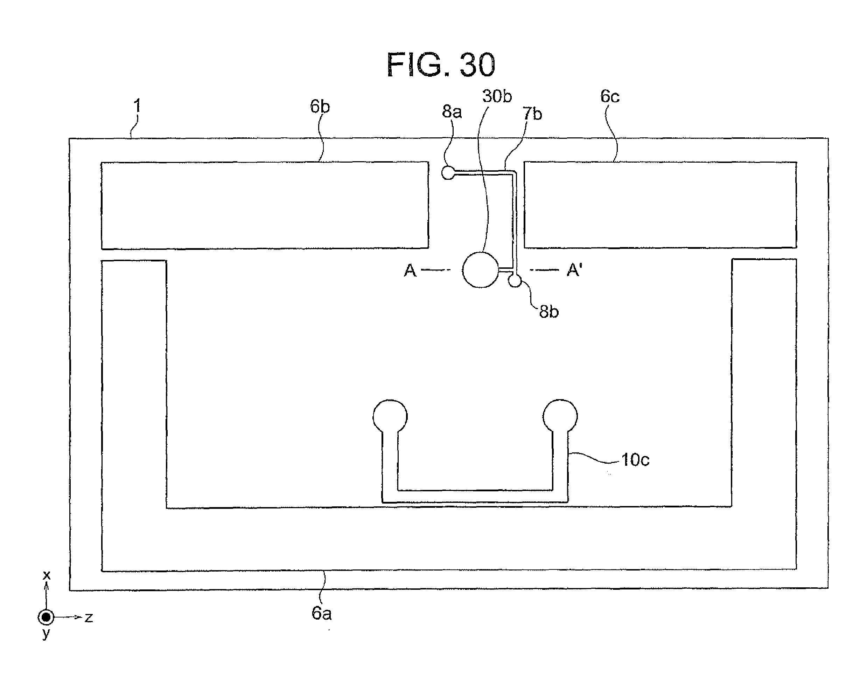

FIG. 29 and FIG. 30 illustrate a conceivable structure that is based on the structure of FIG. 17 and FIG. 18 and the structure of FIG. 19 and FIG. 20 and that is compatible with a dual-frequency integrated circuit 11. In FIG. 29 and FIG. 30, the conductive objects 10 coupled through magnetic field coupling to the conductive object 6a, which acts as a dipole antenna in the first frequency band, are three separate objects 10a, 10b, and 10c. The conductive objects 10a and 10b are placed on the top face of the plate-like object 1, and the conductive object 10c is placed on the bottom face of the plate-like object 1. One end of the conductive object 10a and one end of the conductive object 10b are connected to the terminals of the integrated circuit 11, whereas the other end of the conductive object 10a and the other end of the conductive object 10b are coupled through capacitive coupling to the conductive object 10c.

Specifically, a circular conductor that is a part of the conductive object 10a and a circular conductor that is a part of the conductive object 10c, and a circular conductor that is a part of the conductive object 10b and the circular conductor that is a part of the conductive object 10c each constitute a parallel plate capacitor (second capacitor). As described in the first embodiment, when the first frequency band is sufficiently higher than the second frequency band, the impedance of this parallel plate capacitor has an extremely large absolute value and is substantially in an electrically open state.

Consequently, an impedance seen from the input/output terminal pair of the integrated circuit 11 to the conductive objects 10 is substantially in an electrically open state in the second frequency band, and high communication performance is ensured in the second frequency band.

The capacitance value of the parallel plate capacitor constituted of a part of the conductive object 10a and a part of the conductive object 10c and the capacitance value of the parallel plate capacitor constituted of a part of the conductive object 10b and a part of the conductive object 10c are set such that an impedance match is ensured at the first frequency between the integrated circuit 11 and a first frequency-band antenna constituted of the conductive objects 10 and the conductive object 6a.

Fourth Embodiment

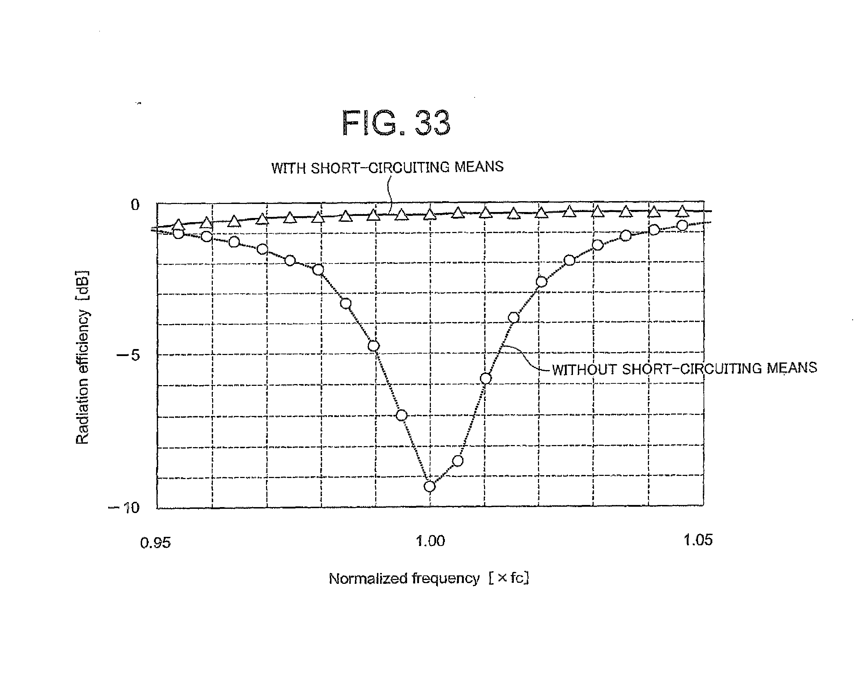

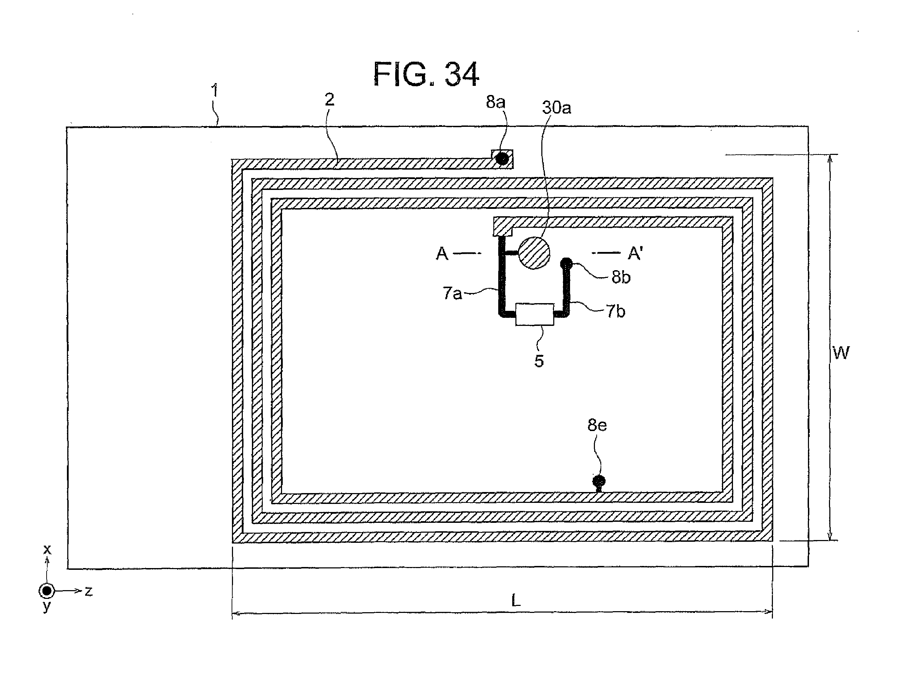

A wireless communication device according to a fourth embodiment of the present invention is described with reference to FIG. 33 to FIG. 41. FIG. 33 is a graph illustrating the results of calculating radiation efficiency-frequency characteristics of the wireless communication devices according to the fourth embodiment and the first embodiment of the present invention. FIG. 34, FIG. 35, FIG. 36, FIG. 37, FIG. 38, FIG. 39, FIG. 40, and FIG. 41 are diagrams illustrating the structure of the wireless communication device according to the fourth embodiment of the present invention.

In order to check whether the antenna structures of the first to third embodiments can always obtain a high radiation efficiency without depending on the coil size and the dielectric constant of the dielectric substrate, the inventors of the present invention examined the relation between the outside coil length L and radiation efficiency-frequency characteristics through electromagnetic analysis.

A graph of FIG. 33 that connects circular marks by lines represents the result of calculating radiation efficiency-frequency characteristics when the outside coil dimensions are 0.133 $\lambda c$ (W) and 0.206 $\lambda c$ (L) in the antenna structure of the first embodiment that is illustrated in FIG. 1 and FIG. 2. The graph shows that the radiation efficiency drops over a wide bandwidth around the center frequency fc. To illuminate the cause of this, the current distribution and the input impedance were further calculated.

It was found as a result that the radiation efficiency dropped significantly when the entire length of the wound coil was approximately an integer multiple of the wavelength. This is presumably because the coil resonates when the entire length of the coil is an integer multiple of the wavelength, the resonator draws in and accumulates energy by nature, and the antenna constituting media (conductors and dielectric materials) have finite loss factors (resistance and dielectric dissipation factor).

Specifically, most of power supplied to a feeding point of the UHF-band antenna (which corresponds to the position of the integrated circuit 4 in FIG. 2) is drawn into the resonator (coil), and a part of this power dissipates as a heat loss through the conductors and the dielectric materials, thereby lowering the proportion of power that is radiated far to the fed power (radiation efficiency).

When a tag that has this antenna is actually designed and manufactured, the number of turns and dimensions of the coil are determined such that favorable communication characteristics are obtained in the HF band. Accordingly, without some modifications, the radiation efficiency of the UHF-band antenna drops significantly and high communication performance may not be obtained in the UHF band.

If the radiation efficiency of the UHF-band antenna drops around the resonant frequency due to the resonation of the coil, the resonant frequency of the coil needs to be moved far from the frequency band used by the UHF-band antenna. One method to accomplish this is to short-circuit the conductive object group 6 and the coil in at least one place.

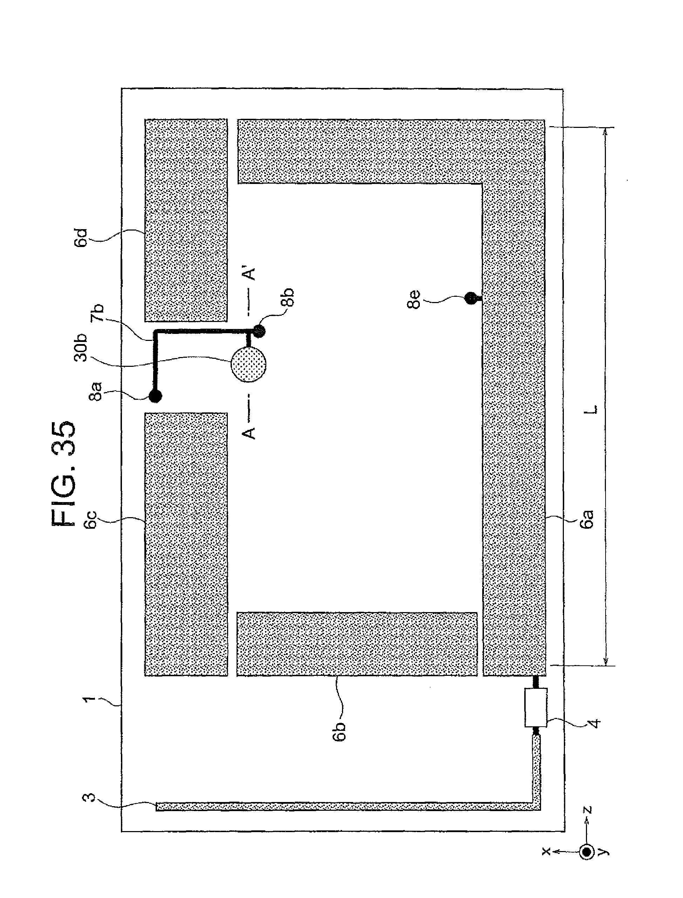

In order to confirm the effectiveness of this method, numerical electromagnetic analysis was performed. A graph of FIG. 33 that connects triangular marks by lines represents the result of calculating radiation efficiency-frequency characteristics when the antenna structure of the first embodiment that is illustrated in FIG. 1 and FIG. 2 is modified by short-circuiting the coil 2 and a member 6a of the conductive object group 6 with the use of short-circuiting means (interlayer connection portion such as through hole) 8e as illustrated in FIG. 34 and FIG. 35, and the outside coil dimensions are set to 0.133 $\lambda$c (W) and 0.206 $\lambda$c (L).

In other words, the graphs of FIG. 33 show a change in radiation efficiency-frequency characteristics created when the short-circuiting means 8e of FIG. 34 and FIG. 35 is present and absent. The graphs reveal that short-circuiting the coil 2 and the member 6a of the conductive object group 6 with the use of the short-circuiting means 8e eliminates undesirable resonance of the coil 2 in the UHF-RFID global bandwidth and greatly improves the radiation efficiency.

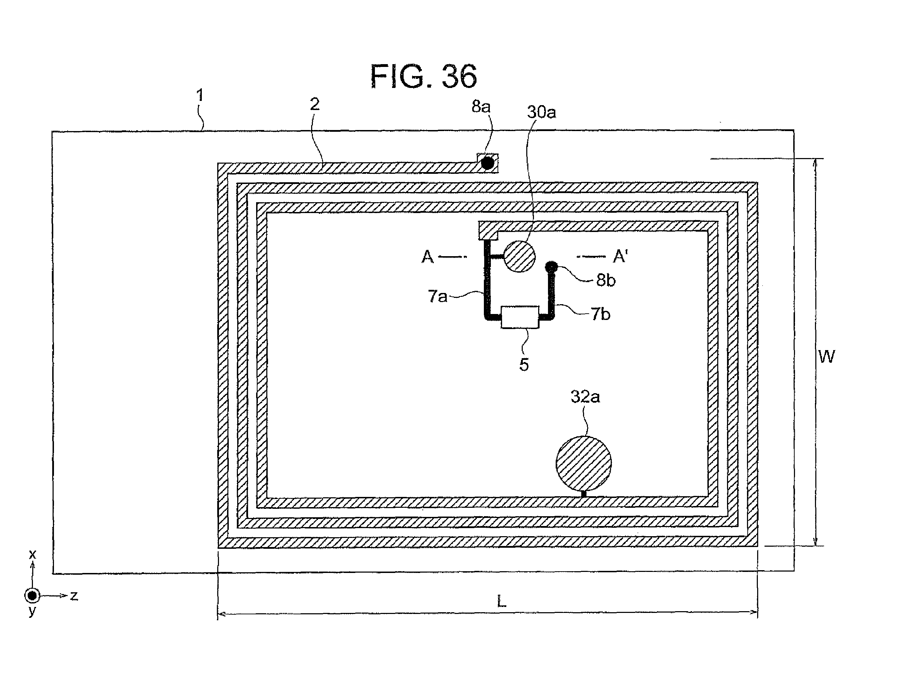

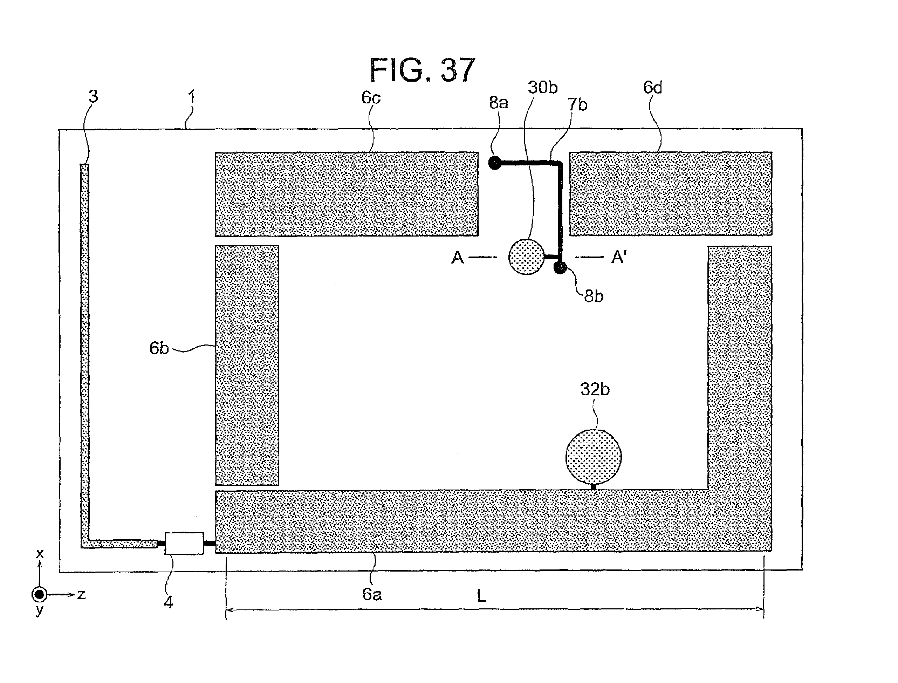

If providing the short-circuiting means 8e causes an electrical characteristic problem or a manufacturing problem, a solution example is illustrated in FIG. 36 and FIG. 37, where the coil 2 and the conductor 6a are partially made thick or partially projected to form plate-like conductive objects 32a and 32b such that the plate-like conductive objects 32a and 32b overlap with each other when viewed from the normal line direction of the plate-like object 1, which is a dielectric material.

A parallel plate capacitor 32 is thus formed. A reactance Xc of the capacitor is $-1/\omega C$. If the capacitance is 32 pF when the center frequency of the UHF-RFID global bandwidth is 910 MHz, Xc is -5.5 $\Omega$ and substantially equivalent to the short circuit. When the capacitance is a half of that value, namely, 16 pF, too, Xc is -11 $\Omega$ and mostly equal to the short circuit.

There is no theoretical basis that the short circuit (Xc = 0 $\Omega$) is always optimum, and the reactance value that electrically connects the coil 2 and the conductor 6 is a design matter to be determined suitably in designing in a manner that gives the wireless communication device favorable communication characteristics.

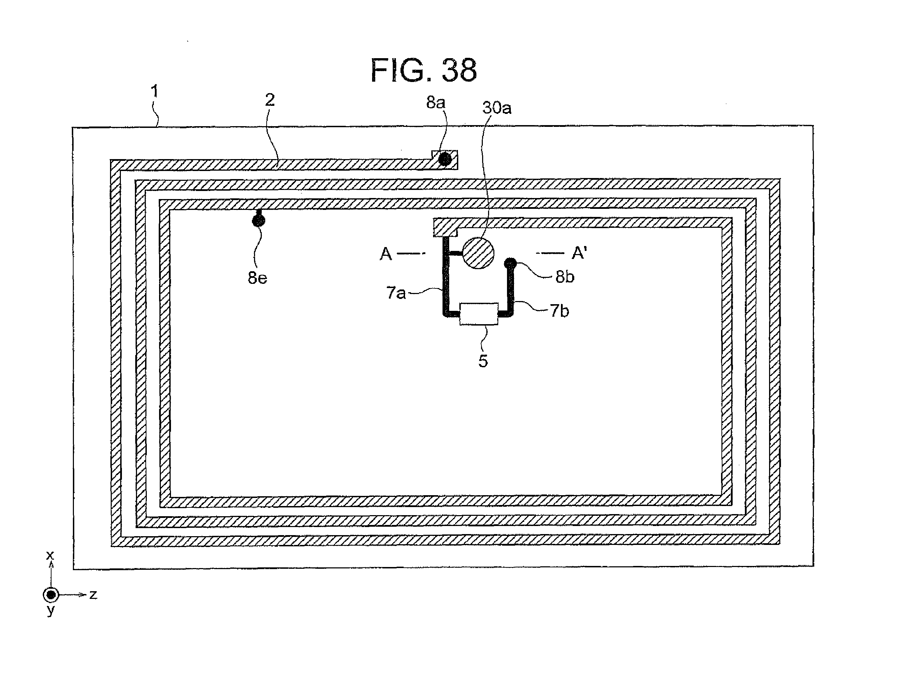

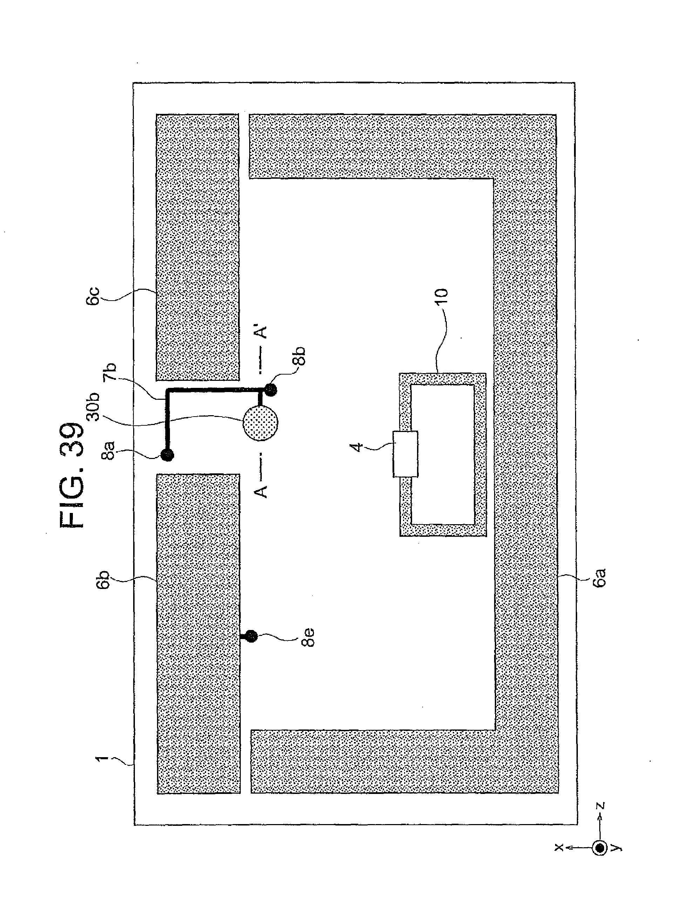

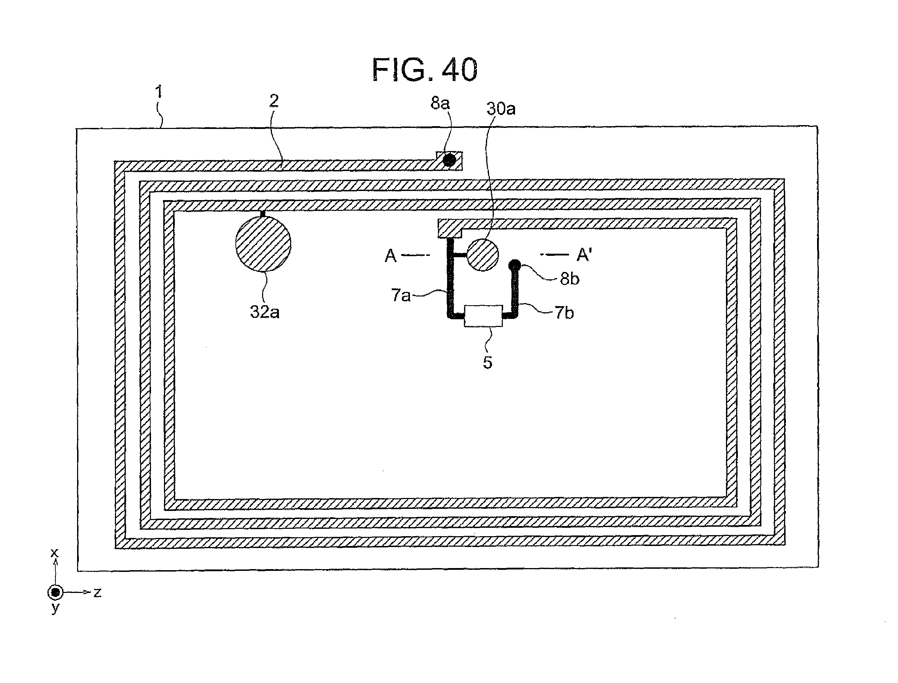

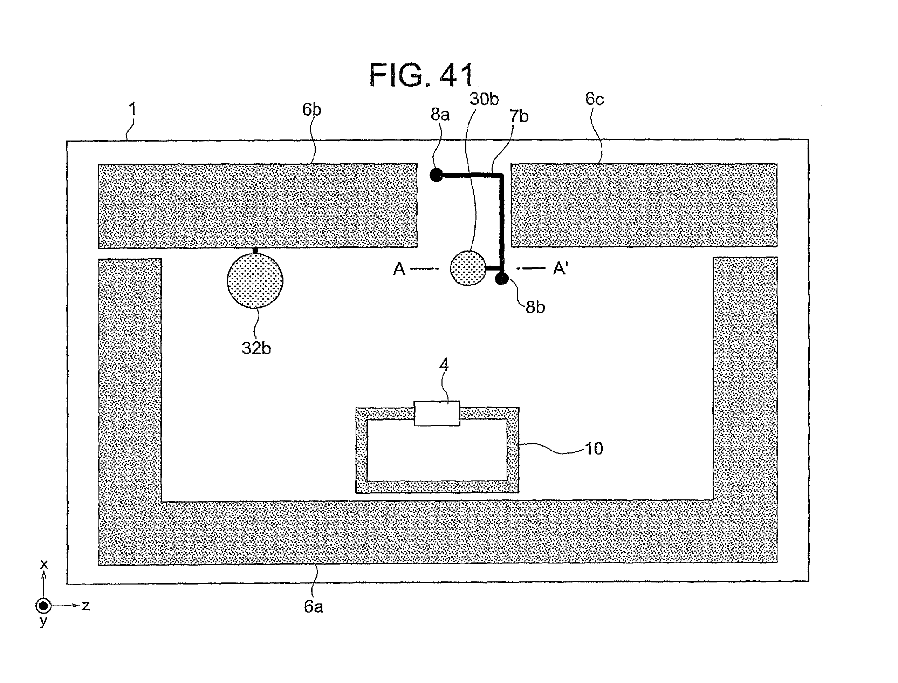

This method is obviously effective for all the structures described in the first to third embodiments (up through FIG. 30), too. Examples of applying this method to the structure of the second embodiment that is illustrated in FIG. 17 and FIG. 18 are found in FIG. 38 and FIG. 39 and in FIG. 40 and FIG. 41.

The coil 2 and the conductor 6, which are coupled through capacitive coupling by the parallel plate capacitor 32 in FIG. 36 and FIG. 37, may be coupled through capacitive coupling by chip capacitor parts, an interdigital capacitor, or the like.

From the viewpoint of changing the resonance characteristics of the coil, in other words, changing the distribution of a UHF-band current which flows in the coil, the reactance that couples the coil 2 and the conductor 6 does not always need to be capacitive and may be inductive. In the case where better communication performance is obtained by selecting inductive coupling, the coil 2 and the conductor 6 are coupled by a chip inductor or a spiral inductor.

Where and at how many points the coil 2 and the conductor 6 are electrically coupled are not limited to those illustrated in FIG. 34 to FIG. 37, and are design matters to be determined suitably in a manner that gives the wireless communication device favorable communication characteristics.

In a practical mode of the wireless communication devices described in the first embodiment to the fourth embodiment, the plate-like object 1 is formed from, for example, polypropylene (PP), polyethylene terephthalate (PET), or polyimide (PI).

The conductive objects 2, 3, 6a, 6b, 6c, 6d, 7a, 7b, 9, 10, 10a, 10b, and 10c, which are formed on the top face or bottom face of the plate-like object 1, can be formed by, for example, etching. Alternatively, the conductive objects are formed through an application of printing technology such as ink jet printing or silk screen printing in which a liquid containing metal particles is adhered to the plate-like object 1.

Alternatively, a double-sided substrate may be used as the plate-like object 1 to form the plate-like object 1 and the conductive objects 2, 3, 6a, 6b, 6c, 6d, 7a, 7b, 9, 10, 10a, 10b, and 10c by etching processing.

The interlayer connection portions 8a, 8b, 8c, 8d, and 8e can be formed by through hole processing technology. The integrated circuits 4, 5, and 11 can be electrically coupled to the conductive objects with the use of solder, a conductive adhesive, or ultrasonic waves.

Though not particularly illustrated in a drawing, the antenna structures are made more suitable for practical use by coating a surface (top face or bottom face of the plate-like object 1 where the conductive objects are formed) of the electrical/electronic circuits of the first to fourth embodiments with coating resin or the like. In this case, preferred coating resin is a material that can be printed onto or that can be printed with letters, or a material that does not easily allow a label to unstick.

The wireless communication devices according to the first to fourth embodiments are applicable to wireless communication that involves credit function or authentication function.

By containing the first frequency band in the UHF band (300 MHz to 3,000 MHz) and containing the second frequency band in the LF band (30 kHz to 300 kHz) or in the HF band (3 MHz to 30 MHz), a wireless communication device in the form of an RFID card-type tag applicable to both the LF band (or the HF band) and the UHF band is obtained that secures as large a mounting area as possible for an antenna of one frequency band and an antenna of the other frequency band each, and that has a communication range equal to the communication range of a tag for an LF-band RFID system (or an HF-band RFID system) alone and the communication range of a tag for a UHF-band RFID system alone.

List of Reference Signs

| | |
|---|---|
| 1 | = plate-like object |
| 2 | = coiled conductive object |
| 3 | = conductive object |
| 4 | = integrated circuit |
| 5 | = integrated circuit |
| 6, 6a, 6b, 6c, 6d | = conductive object |
| 7, 7a, 7b | = conductive object |
| 8, 8a, 8b, 8c, 8e | = interlayer connection portion |
| 9 | = conductive object |
| 10, 10a, 10b, 10c | = conductive object |
| 11 | = integrated circuit |
| 30 | = parallel plate capacitor |
| 30a, 30b | = plate-like conductive object |
| 32 | = parallel plate capacitor |
| 32a, 32b | = plate-like conductive object |

**Claims**

1. A wireless communication device capable of communicating a signal in a first frequency band and a signal in a second frequency band, which is lower in frequency than the first frequency band, comprising:

   - a plate-like object;
   - a first integrated circuit which has a function of communicating in the first frequency band;
   - a first conductive object which is connected to one of two input/output terminals of the first integrated circuit;
   - a conductive object group constituted of a plurality of second conductive objects at least one of which is connected to another of the two input/output terminals of the first integrated circuit;
   - a second integrated circuit which has a function of communicating in the second frequency band; and
   - a coiled conductive object of which a winding start side is connected to one of two input/output terminals of the second integrated circuit and a winding end side is connected to another of the two input/output terminals of the second integrated circuit,

   wherein the conductive object group and the coiled conductive object are formed on opposite faces of the plate-like object from each other, and wherein, in a perspective view from a normal line direction of the plate-like object, a half or more of the coiled conductive object overlaps with the conductive object group.

2. A wireless communication device according to claim 1,
   wherein, in a perspective view from the normal line direction of the plate-like object, the first conductive object is located outside the coiled conductive object.

3. A wireless communication device according to claim 1 or 2,
   further comprising a third conductive object,
   wherein the third conductive object has one end connected to the first conductive object and another end connected to the second conductive object that belongs to the conductive object group and that is connected to the another of the two input/output terminals of the first integrated circuit.

4. A wireless communication device capable of communicating a signal in a first frequency band and a signal in a second frequency band, which is lower in frequency than the first frequency band, comprising:

   - a plate-like object;
   - a first integrated circuit which has a function of communicating in the first frequency band;

- a first conductive object which is formed on one face of the plate-like object;
- a conductive object group constituted of a plurality of second conductive objects at least one of which is connected to the first conductive object;
- a fourth conductive object which is connected between two input/output terminals of the first integrated circuit and has a closed loop shape;
- a second integrated circuit which has a function of communicating in the second frequency band; and
- a coiled conductive object of which a winding start side is connected to one of two input/output terminals of the second integrated circuit and a winding end side is connected to another of the two input/output terminals of the second integrated circuit,

wherein the conductive object group and the coiled conductive object are formed on opposite faces of the plate-like object from each other, wherein, in a perspective view from a normal line direction of the plate-like object, a half or more of the coiled conductive object overlaps with the conductive object group, and
wherein the fourth conductive object is placed close to at least one of the first conductive object and the coiled conductive object.

5. A wireless communication device capable of communicating a signal in a first frequency band and a signal in a second frequency band, which is lower in frequency than the first frequency band, comprising:

- a plate-like object;
- a first integrated circuit which has a function of communicating in the first frequency band;
- a conductive object group constituted of a plurality of second conductive objects;
- a fifth conductive object which is connected between one of two input/output terminals of the first integrated circuit and at least one of the plurality of second conductive objects belonging to the conductive object group;
- a sixth conductive object which is connected between another of the two input/output terminals of the first integrated circuit and at least one of the plurality of second conductive objects belonging to the conductive object group;
- a second integrated circuit which has a function of communicating in the second frequency band; and
- a coiled conductive object of which a winding start side is connected to one of two input/output terminals of the second integrated circuit and a winding end side is connected to another of the two input/output terminals of the second integrated circuit,

wherein the conductive object group and the coiled conductive object are formed on opposite faces of the plate-like object from each other, and wherein, in a perspective view from a normal line direction of the plate-like object, a half or more of the coiled conductive object overlaps with the conductive object group.

6. A wireless communication device capable of communicating a signal in a first frequency band and a signal in a second frequency band, which is lower in frequency than the first frequency band, comprising:

- a plate-like object;
- a first integrated circuit which has a function of communicating in the first frequency band;
- a conductive object group constituted of a plurality of second conductive objects;
- a fourth conductive object which is connected between two input/output terminals of the first integrated circuit and has a closed loop shape;
- a second integrated circuit which has a function of communicating in the second frequency band; and
- a coiled conductive object of which a winding start side is connected to one of two input/output terminals of the second integrated circuit and a winding end side is connected to another of the two input/output terminals of the second integrated circuit,

wherein the conductive object group and the coiled conductive object are formed on opposite faces of the plate-like object from each other, wherein, in a perspective view from a normal line direction of the plate-like object, a half or more of the coiled conductive object overlaps with the conductive object group, and
wherein the fourth conductive object is placed close to at least one of the coiled conductive object.

7. A wireless communication device according to any one of claims 1 to 6, further comprising a first capacitor which is connected between the two input/output terminals of the second integrated circuit.

8. A wireless communication device capable of communicating a signal in a first frequency band and a signal in a second frequency band, which is lower in frequency than the first frequency band, comprising:

- a plate-like object;
- an integrated circuit which has a function of communicating in the first frequency band, a function of communicating in the second frequency band, a first input/output terminal pair for inputting/ outputting a signal in the first frequency band, and a second input/ output terminal pair for inputting/outputting a signal in the second frequency band;
- a conductive object group constituted of a plurality of second conductive objects;
- a fourth conductive object which is connected between terminals of the first input/output terminal pair of the integrated circuit and has a closed loop shape; and
- a coiled conductive object of which a winding start side is connected to one terminal of the second input/output terminal pair of the integrated circuit and a winding end side is connected to another terminal of the second input/output terminal pair of the integrated circuit,

wherein the conductive object group and the coiled conductive object are formed on opposite faces of the plate-like object from each other, wherein, in a perspective view from a normal line direction of the plate-like object, a half or more of the coiled conductive object overlaps with the conductive object group, and
wherein the fourth conductive object is placed close to at least one of the coiled conductive object.

9. A wireless communication device capable of communicating a signal in a first frequency band and a signal in a second frequency band, which is lower in frequency than the first frequency band, comprising:

- a plate-like object;
- an integrated circuit which has a function of communicating in the first frequency band, a function of communicating in the second frequency band, and an input/output terminal pair for inputting/ outputting a signal in the first frequency band and a signal in the second frequency band;
- a conductive object group constituted of a plurality of second conductive objects;
- a fourth conductive object which is connected between terminals of the input/output terminal pair of the integrated circuit and has a closed loop shape; and
- a coiled conductive object of which a winding start side is connected to one terminal of the input/output terminal pair of the integrated circuit and a winding end side is connected to another terminal of the input/output terminal pair of the integrated circuit,

wherein the conductive object group and the coiled conductive object are formed on opposite faces of the plate-like object from each other, wherein, in a perspective view from a normal line direction of the plate-like object, a half or more of the coiled conductive object overlaps with the conductive object group, and
wherein the fourth conductive object is placed close to at least one of the coiled conductive object.

10. A wireless communication device according to claim 9,
further comprising a second capacitor which is inserted at a point along the closed loop of the fourth conductive object.

11. A wireless communication device capable of communicating a signal in a first frequency band and a signal in a second frequency band, which is lower in frequency than the first frequency band, comprising:

- a plate-like object;
- an integrated circuit which has a function of communicating in the first frequency band, a function of communicating in the second frequency band, and an input/output terminal pair for inputting/ outputting a signal in the first frequency band and a signal in the second frequency band;
- a conductive object group constituted of a plurality of second conductive objects;
- a fifth conductive object which is connected between one terminal of the input/output terminal pair of the integrated circuit and at least one of the plurality of second conductive objects belonging to the conductive object group;
- a sixth conductive object which is connected between another terminal of the input/output terminal pair of the integrated circuit and the second conductive object belonging to the conductive object group that is not connected to the fifth conductive object; and
- a coiled conductive object of which a winding start side is connected to the one terminal of the input/output terminal pair of the integrated circuit and a winding end side is connected to the another terminal of the input/ output terminal pair of the integrated circuit,

wherein the conductive object group and the coiled conductive object are formed on opposite faces of the plate-like object from each other, and wherein, in a perspective view from a normal line direction of the plate-like object, a half or more of the coiled conductive object overlaps with the conductive object group.

12. A wireless communication device according to claim 11,
further comprising a first capacitor which is connected between the terminals of the input/output terminal pair of the integrated circuit.

13. A wireless communication device according to claim 7, 10, or 12,
wherein the first capacitor or the second capacitor is one selected from the group consisting of a parallel plate capacitor, an interdigital capacitor, and a capacitor part.

14. A wireless communication device according to any one of claims 1 to 13, wherein a front face and a rear face of the plate-like object on which the conductive objects are all formed are coated with resin.

15. A wireless communication device according to any one of claims 1 to 14, wherein the first frequency band is 300 MHz to 3,000 MHz, and the second frequency band is 30 kHz to 300 kHz or 3 MHz to 30 MHz.

16. A wireless communication device according to any one of claims 1 to 15, further comprising short-circuiting means for short-circuiting the coiled conductive object and the conductive object group in at least one place.

17. A wireless communication device according to any one of claims 1 to 15, further comprising an impedance which connects the coiled conductive object and the conductive object group in at least one place.

18. A wireless communication device according to claim 17,
wherein the impedance is one selected from the group consisting of a parallel plate capacitor, a capacitor part, an interdigital capacitor, an inductor part, and a spiral inductor.

EP 2 448 064 A1

FIG. 1

# FIG. 2

# FIG. 3

FIG. 4

EP 2 448 064 A1

FIG. 5A  FIG. 5B  FIG. 5C  FIG. 5D

L=0.121 λ1    L=0.143 λ1    L=0.168 λ1    L=0.194 λ1

23

## FIG. 6

EP 2 448 064 A1

# FIG. 7

x—z plane

y—z plane

EP 2 448 064 A1

# FIG. 8

|  | Rin [Ω] | Xin [Ω] |
|---|---|---|
| WITHOUT CONDUCTORS 6A TO 6D | 4.9 | 338 |
| WITH CONDUCTORS 6A TO 6D | 5.9 | 371 |

# FIG. 9

EP 2 448 064 A1

EP 2 448 064 A1

# FIG. 10

# FIG. 11

FIG. 12

EP 2 448 064 A1

# FIG. 13

EP 2 448 064 A1

# FIG. 14

FIG. 15

# FIG. 16

FIG. 17

EP 2 448 064 A1

# FIG. 18

EP 2 448 064 A1

FIG. 19

FIG. 20

EP 2 448 064 A1

# FIG. 21

# FIG. 22

FIG. 23

FIG. 24

# FIG. 25

EP 2 448 064 A1

FIG. 26

EP 2 448 064 A1

EP 2 448 064 A1

FIG. 27

45

# FIG. 28

EP 2 448 064 A1

FIG. 29

FIG. 30

# FIG. 31

EP 2 448 064 A1

FIG. 32

# FIG. 33

WITH SHORT-CIRCUITING MEANS

WITHOUT SHORT-CIRCUITING MEANS

Radiation efficiency [dB]

Normalized frequency [× fc]

FIG. 34

EP 2 448 064 A1

FIG. 35

EP 2 448 064 A1

FIG. 36

FIG. 37

FIG. 38

EP 2 448 064 A1

FIG. 39

# FIG. 40

EP 2 448 064 A1

# FIG. 41

EP 2 448 064 A1

## INTERNATIONAL SEARCH REPORT

| International application No. |
| --- |
| PCT/JP2010/058902 |

A. CLASSIFICATION OF SUBJECT MATTER
*H01Q5/01*(2006.01)i, *G06K19/07*(2006.01)i, *G06K19/077*(2006.01)i, *H01Q7/00*
(2006.01)i, *H01Q9/26*(2006.01)i, *H01Q21/30*(2006.01)i

According to International Patent Classification (IPC) or to both national classification and IPC

B. FIELDS SEARCHED

Minimum documentation searched (classification system followed by classification symbols)
H01Q5/01, G06K19/07, G06K19/077, H01Q7/00, H01Q9/26, H01Q21/30

Documentation searched other than minimum documentation to the extent that such documents are included in the fields searched
Jitsuyo Shinan Koho          1922-1996    Jitsuyo Shinan Toroku Koho   1996-2010
Kokai Jitsuyo Shinan Koho    1971-2010    Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2007-324865 A  (Sony Chemical & Information Device Corp.),<br>13 December 2007 (13.12.2007),<br>fig. 8 to 9; paragraphs [0037] to [0043]<br>& US 2009/0201116 A1    & WO 2007/138770 A1<br>& CN 101536251 A | 1-18 |
| A | WO 2008/126451 A1  (Murata Mfg. Co., Ltd.),<br>23 October 2008 (23.10.2008),<br>fig. 4; paragraphs [0040] to [0045]<br>& JP 4333821 B          & US 2008/0246664 A1<br>& EP 2071495 A1          & CN 101568933 A | 1-4,7,13 |

[X] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 August, 2010 (12.08.10) | 24 August, 2010 (24.08.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/058902

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-312350 A  (Industrial Technology Research Institute), 29 November 2007 (29.11.2007), entire text; all drawings & US 2007/0290928 A1     & DE 102006054078 A & CN 101075701 A         & KR 10-2007-0111952 A | 4,6,8-10 |
| A | JP 2008-187601 A  (Fujitsu Ltd.), 14 August 2008 (14.08.2008), fig. 17; paragraphs [0025] to [0028] & US 2008/0180328 A1     & EP 1953867 A1 & KR 10-2008-0071890 A   & CN 101236612 A | 4,6,8-10 |
| A | JP 2005-252853 A  (FEC Inc. et al.), 15 September 2005 (15.09.2005), entire text; all drawings (Family: none) | 1-18 |
| A | JP 2005-190119 A  (Brother Industries, Ltd.), 14 July 2005 (14.07.2005), fig. 4; paragraph [0024]; fig. 10; paragraph [0030] & WO 2005/064527 A1 | 1-18 |
| A | JP 2007-150642 A  (Hitachi ULSI Systems Co., Ltd.), 14 June 2007 (14.06.2007), fig. 4; paragraphs [0036] to [0040] (Family: none) | 14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004240899 A

**Non-patent literature cited in the description**

- **K. S. Leong ; M. L. Ng ; P. H. Cole.** Miniaturization of dual frequency RFID antenna with high frequency ratio. *2007 IEEE Antennas and Propagation Society International Symposium Digest,* July 2007, 5475-5478